# EUROPEAN PATENT APPLICATION

(11) **EP 4 708 914 A1**
(43) Date of publication of application: **11.03.2026**
(21) Application number: 24819483.9
(22) Date of filing: 29.04.2024
(51) Int. Cl.: H04R 3/12, H04R 5/04

(54) **ELECTRONIC DEVICE FOR PROVIDING AUDIO SERVICE AND METHOD FOR OPERATING SAME**

(30) Priority: 07.06.2023 KR 20230072914; 17.07.2023 KR 20230092300
(71) Applicant: Samsung Electronics Co., Ltd., Suwon-si, Gyeonggi-do 16677 (KR)
(72) Inventor: JIN, Juyeon, Suwon-si Gyeonggi-do 16677 (KR); CHEONG, Gupil, Suwon-si Gyeonggi-do 16677 (KR); GI, Hyenho, Suwon-si Gyeonggi-do 16677 (KR)
(74) Representative: Appleyard Lees IP LLP
(86) International application number: PCT/KR2024/005790
(87) International publication number: WO 2024/253331

(57) **Abstract**

Disclosed is an electronic device comprising a memory for storing instructions, a communication circuit, and at least one processor. The instructions may cause the electronic device to: allocate a first time interval for transmitting first audio data within an interval of a broadcast stream-based audio service; allocate a third time interval for an additional audio service related to the audio service within a second time interval remaining after excluding the first time interval within the interval; transmit first information related to the first time interval and second information related to the third time interval; transmit the first audio data in the first time interval; determine whether a first priority of the additional audio service is higher than a second priority of a communication task scheduled in the second time interval; and transmit second audio data related to the first audio data in the third time interval when the first priority of the additional audio service is higher than the second priority.

## Description

### [Technical Field]

Various embodiments relate to an electronic device for providing an audio service and a method for operating the same.

### [Background Art]

Bluetooth communication technology may suggest a short-range wireless communication technology that enables electronic devices to be connected to each other for exchanging data or information. Bluetooth communication technology may have Bluetooth legacy (or classic) communication technology or Bluetooth low energy (BLE) communication technology and have various kinds of topology, such as piconet or scatternet.

Recently in wide use are electronic devices adopting Bluetooth communication technology. For example, a pair of earbuds that may be respectively worn on both ears of the user are widely used as an ear-wearable device. An ear-wearable device may provide various functions. For example, an ear-wearable device may include a microphone to identify the user's voice, thereby transmitting data for the user's voice to an electronic device (e.g., a smartphone). Further, the ear-wearable device may include a speaker to output the audio data received from an electronic device (e.g., a smartphone) through the speaker.

The ear-wearable device may include a primary earbud (e.g., the right earbud) and a secondary earbud (e.g., the left earbud) that may be connected to an electronic device (e.g., a smartphone). The primary earbud may transmit voice data to the electronic device through connection with the electronic device, and the electronic device may transmit audio data (or audio content) to the primary earbud. The primary earbud may receive audio data (or audio content) from the electronic device through wireless communication and may output the audio data through the speaker. The secondary earbud may be synchronized with the primary earbud, outputting the audio data received from the electronic device through the speaker.

The primary earbud and the secondary earbud (hereinafter referred to as 'earbuds') may be connected to each other based on Bluetooth communication to perform the above operations. To that end, the earbuds may perform inquiry, inquiry scan, page, and page scan based on Bluetooth classic and/or perform BLE advertising and BLE scan based on BLE.

The BLE advertising may mean an operation for periodically broadcasting advertising data through an advertising physical channel, and the BLE scan may mean an operation for monitoring reception of the advertising data.

### [Detailed Description of the Invention]

### [Technical Solution]

An electronic device and a method for operating the same according to embodiments of the disclosure may broadcast audio data.

An electronic device and an operating method thereof according to embodiments of the disclosure may broadcast additional audio data within a second time period except for a first time period allocated for transmitting audio data.

An electronic device according to an embodiment of the disclosure may include memory storing instructions, communication circuitry, and at least one processor functionally connected to the memory and the communication circuitry. The instructions may, when executed by the at least one processor, cause the electronic device to allocate a first time period for transmitting first audio data within an interval of a broadcast stream-based audio service. The instructions may, when executed by the at least one processor, cause the electronic device to allocate a third time period for an additional audio service related to the audio service within a remaining second time period except for the first time period within the interval. The instructions may, when executed by the at least one processor, cause the electronic device to transmit first information related to the first time period and second information related to the third time period. The instructions may, when executed by the at least one processor, cause the electronic device to transmit the first audio data in the first time period. The instructions may, when executed by the at least one processor, cause the electronic device to determine whether a first priority of the additional audio service is higher than a second priority of a communication task scheduled in the third time period. The instructions may, when executed by the at least one processor, cause the electronic device to transmit second audio data related to the first audio data in the third time period when the first priority of the additional audio service is higher than the second priority.

An electronic device according to an embodiment of the disclosure may include memory storing instructions, communication circuitry, and at least one processor functionally connected to the memory and the communication circuitry. The instructions may, when executed by the at least one processor, cause the electronic device to obtain first information including parameters for a broadcast stream-based audio service and second information related to an additional audio service related to the audio service. The instructions may, when executed by the at least one processor, cause the electronic device to synchronize to the broadcast stream for the audio service based on the first information. The instructions may, when executed by the at least one processor, cause the electronic device to receive first audio data in a first time period within an interval for the audio service identified based on the first information. The instructions may, when executed by the at least one processor, cause the electronic device to determine whether a communication task scheduled for a remaining second time period except for the first time period within the interval exists and whether a first priority of the additional audio service is higher than a second priority of the communication task. The instructions may, when executed by the at least one processor, cause the electronic device to receive second audio data related to the first audio data in a third time period within the second time period identified based on the second information when the first priority of the additional audio service is higher than the second priority of the communication task.

A method performed by an electronic device according to an embodiment of the disclosure may include allocating a first time period for transmitting first audio data within an interval of a broadcast stream-based audio service. The method may include allocating a third time period for an additional audio service related to the audio service within a remaining second time period except for the first time period within the interval. The method may include transmitting first information related to the first time period and second information related to the third time period. The method may include transmitting the first audio data in the first time period. The method may include determining whether a first priority of the additional audio service is higher than a second priority of a communication task scheduled in the third time period. The method may include transmitting second audio data related to the first audio data in the third time period when the first priority of the additional audio service is higher than the second priority.

A method performed by an electronic device according to an embodiment of the disclosure may include obtaining first information including parameters for a broadcast stream-based audio service and second information related to an additional audio service related to the audio service. The method may include synchronizing to the broadcast stream for the audio service based on the first information. The method may include receiving first audio data in a first time period within an interval for the audio service identified based on the first information. The method may include determining whether a communication task scheduled for a remaining second time period except for the first time period within the interval exists and whether a first priority of the additional audio service is higher than a second priority of the communication task. The method may include receiving second audio data related to the first audio data in a third time period within the second time period identified based on the second information when the first priority of the additional audio service is higher than the second priority of the communication task.

In a non-transitory, computer-readable storage medium storing one or more programs according to an embodiment, the one or more programs may include instructions configured to, when executed by at least one processor of an electronic device, cause the electronic device to allocate a first time period for transmitting first audio data within an interval of a broadcast stream-based audio service, allocate a third time period for an additional audio service related to the audio service within a remaining second time period except for the first time period within the interval, transmit first information related to the first time period and second information related to the third time period, transmit the first audio data in the first time period, determine whether a first priority of the additional audio service is higher than a second priority of a communication task scheduled in the second time period, and transmit second audio data related to the first audio data in the third time period when the first priority of the additional audio service is higher than the second priority.

In a non-transitory, computer-readable storage medium storing one or more programs according to an embodiment, the one or more programs may include instructions configured to, when executed by at least one processor of an electronic device, cause the electronic device to obtain first information including parameters for a broadcast stream-based audio service and second information related to an additional audio service related to the audio service, synchronize to the broadcast stream for the audio service based on the first information, receive first audio data in a first time period within an interval for the audio service identified based on the first information, determine whether a communication task scheduled for a remaining second time period except for the first time period within the interval exists and whether a first priority of the additional audio service is higher than a second priority of the communication task, and receive second audio data related to the first audio data in a third time period within the second time period identified based on the second information when the first priority of the additional audio service is higher than the second priority of the communication task.

### [Brief Description of Drawings]

FIG. 1 is a view illustrating an electronic device in a network environment according to an embodiment;
FIG. 2 is a view illustrating connection between electronic devices based on short-range wireless communication according to an embodiment of the disclosure;
FIG. 3 is a view illustrating a configuration of an electronic device supporting short-range wireless communication according to an embodiment;
FIG. 4 is a sequence diagram illustrating a Bluetooth LE (BLE) scan operation according to an embodiment of the disclosure;
FIG. 5 is a sequence diagram illustrating a procedure for synchronizing with a broadcast isochronous group (BIG), according to an embodiment of the disclosure;
FIG. 6 is a view illustrating BIG parameters according to an embodiment of the disclosure;
FIG. 7 is a view illustrating a BIG event and a BIS event according to an embodiment of the disclosure;
FIGS. 8, 9, and 10 are views illustrating retransmission of BIS data packets according to embodiments of the disclosure;
FIG. 11A is a view illustrating an audio service according to an embodiment of the disclosure;
FIG. 11B is a view illustrating a configuration of a source electronic device according to an embodiment of the disclosure;
FIG. 12 illustrates a sequence diagram illustrating a procedure for providing a BIS audio service according to an embodiment of the disclosure;
FIG. 13 illustrates a timing diagram illustrating a BIS audio service according to an embodiment of the disclosure;
FIG. 14 illustrates a flowchart illustrating a procedure for providing an audio service according to an embodiment of the disclosure;
FIG. 15 is a view illustrating transmission of additional audio data according to an embodiment of the disclosure;
FIG. 16 is a view illustrating an assistant-based audio service according to an embodiment of the disclosure;
FIG. 17 is a view illustrating reception of additional audio data according to an embodiment of the disclosure;
FIG. 18 illustrates a flowchart illustrating a procedure for receiving an audio service according to an embodiment of the disclosure;
FIG. 19 illustrates a flowchart illustrating a procedure for receiving an assistant-based audio service according to an embodiment of the disclosure;
FIGS. 20 and 21 are views illustrating allocation of time periods according to embodiments of the disclosure;
FIG. 22 is a view illustrating a third time period for an additional audio service according to an embodiment of the disclosure;
FIG. 23 illustrates an example of additional audio information transmitted through periodic advertising according to an embodiment of the disclosure;
FIG. 24 illustrates an example of additional audio information transmitted through an audio data packet according to an embodiment of the disclosure;
FIG. 25 is a view illustrating a procedure for notifying an additional audio service using a control packet according to an embodiment;
FIG. 26 is a view illustrating transmission of additional audio data according to an embodiment of the disclosure;
FIG. 27 is a view illustrating transmission of additional audio data using PTO according to an embodiment of the disclosure;
FIG. 28 is a view illustrating transmission of additional audio data using subsequent data according to an embodiment of the disclosure;
FIGS. 29 and 30 are views illustrating establishment of an assistant connection according to an embodiment;
FIG. 31 is a view illustrating BLE scan by a BIS assistant according to an embodiment of the disclosure;
FIG. 32 is a view illustrating an operation of receiving unreceived packets through an additional audio service according to an embodiment of the disclosure;
FIG. 33 is a view illustrating an operation of receiving future packets through an additional audio service according to an embodiment of the disclosure; and
FIGS. 34 and 35 are views illustrating examples of performing other communication tasks after reception of additional audio data according to embodiments of the disclosure.

### [Mode for Carrying out the Invention]

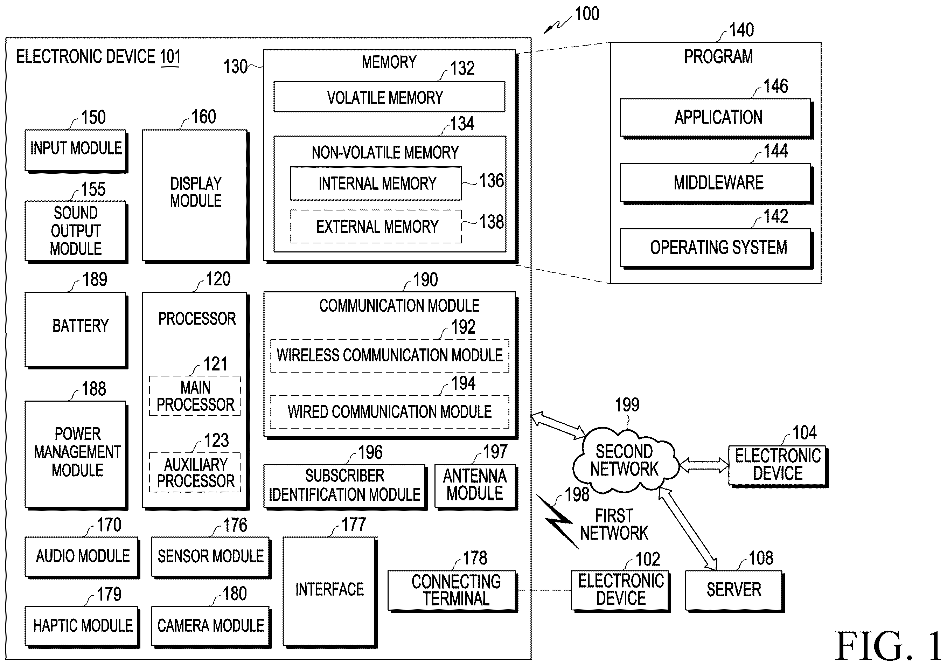

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

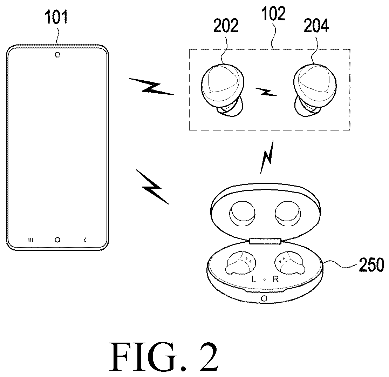

FIG. 2 is a view illustrating connection between electronic devices based on short-range wireless communication according to an embodiment of the disclosure;

Referring to FIG. 2, an electronic device (e.g., the electronic device 101) may be wirelessly connected to an external electronic device 102 (e.g., an ear-wearable device). In an embodiment, the electronic device 101 may be a smartphone, tablet, or laptop computer. In an embodiment, the external electronic device 102 is a true wireless stereo (TWS) device, such as a binaural ear-wearable device, and may include at least one of a first electronic device 202 (e.g., a right earbud) and a second electronic device 204 (e.g., a left earbud).

In an embodiment, the first electronic device 202 and the second electronic device 204 are shown as a pair of earbuds, but the first electronic device 202 and the second electronic device 204 may include not only earbuds but also devices capable of operating in pair. According to an embodiment, the first electronic device 202 and the second electronic device 204 may be implemented to include the same or similar components to each other.

According to an embodiment, the electronic device 101 may establish a connection (e.g., a communication link) with at least one of the first electronic device 202 or the second electronic device 204 and transmit and/or receive data to/from each other. For example, the electronic device 101 may establish a communication link with at least one of the first electronic device 202 and the second electronic device 204 based on short-range wireless communication technology, such as at least one of Wi-Fi or Bluetooth (e.g., Bluetooth classic or Bluetooth low energy (BLE)), or ultra-wideband (UWB). However, the scheme in which the electronic device 101 establishes a communication link with the first electronic device 202 and the second electronic device 204 is not limited to at least one of Wi-Fi, Bluetooth, or UWB.

In an embodiment, the electronic device 101 may establish a communication link with only one of the first electronic device 202 or the second electronic device 204 or establish an individual communication link with each of the first electronic device 202 and the second electronic device 204.

In an embodiment, the electronic device 101 may play a role as central, and the external electronic device 102 (e.g., at least one of the first electronic device 202 or the second electronic device 204) may play a role as peripheral. In an audio service, the electronic device 101 operating as central may be a source electronic device, and the external electronic device 102 (e.g., the first electronic device 202 or the second electronic device 204) operating as peripheral may be a sink electronic device.

In an embodiment, the first electronic device 202 and the second electronic device 204 may establish a communication link therebetween based on at least one of, e.g., Wi-Fi, Bluetooth, or UWB, but the scheme for establishing a communication link by the first electronic device 202 and the second electronic device 204 is not limited to at least one of Wi-Fi, Bluetooth, or UWB.

In an embodiment, either the first electronic device 202 or the second electronic device 204 may operate as a primary device, and the other one may operate as a secondary device. The electronic device (e.g., the first electronic device 202) operating as primary may transmit data (e.g., reception acknowledgment signal or relay data) to the electronic device (e.g., the second electronic device 204) operating as secondary. For example, when the first electronic device 202 and the second electronic device 204 establish a communication link with each other, any one of the first electronic device 202 and the second electronic device 204 may be randomly selected as primary, and the other may be selected as secondary.

The electronic device 101, the first electronic device 202, and/or the second electronic device 204 may communicate directly or indirectly with the external electronic device 250. In an embodiment, the external electronic device 250 may be an ear bud case device or cradle device for storing and charging the first electronic device 202 and the second electronic device 204.

According to an embodiment, the external electronic device 250 may establish a connection (e.g., a communication link) with at least one of the electronic device 101, the first electronic device 202 or the second electronic device 204 and transmit and/or receive data to/from each other. For example, the external electronic device 250 may establish a communication link with at least one of the electronic device 101, the first electronic device 202, or the second electronic device 204 based on a Wi-Fi scheme, a Bluetooth scheme (e.g., Bluetooth classic or Bluetooth low energy (BLE)) or UWB scheme, but the scheme in which the external electronic device 250 establishes a communication link with the electronic device 101, the first electronic device 202, or the second electronic device 204 is not limited to at least one of the Wi-Fi scheme, the Bluetooth scheme, or the UWB scheme.

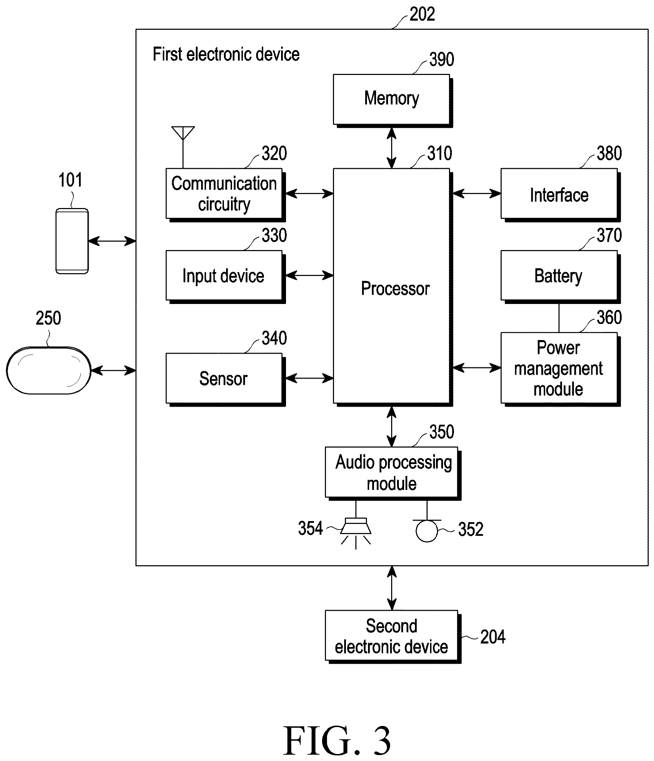

FIG. 3 is a view illustrating a configuration of an electronic device supporting short-range wireless communication according to an embodiment;

Referring to FIG. 3, the electronic device 101 may be wirelessly connected to the electronic devices 202 and 204. The electronic device 101 may be implemented as, e.g., a smartphone but, without being limited to those described and/or shown, may be implemented as various types of devices (e.g., notebook computers including standard laptop computers, Ultrabook, or tab books, laptop computers, tablet computers, or desktop computers). The electronic device 101 may be implemented as shown in FIG. 1 and may thus include at least some of the components (e.g., various modules) shown in FIG. 1, and no duplicate description thereof is thus given below.

The electronic devices 202 and 204 may be implemented as wireless earbuds but, without being limited to those described and/or shown, may be implemented as various types of devices (e.g., a smart watch, a head-mounted display device, or devices for measuring biometric signals (e.g., heartrate patch)) that supports an audio service as described below. According to an embodiment, when the electronic devices 202 and 204 are wireless earbuds, the first electronic device 202 and the second electronic device 204 may be a pair of devices (e.g., a right earbud and a left earbud). According to an embodiment, the first electronic device 202 and the second electronic device 204 may be implemented to include the same or similar components.

The electronic device 101 may establish a communication connection with at least one of the electronic devices 202 and 204 and transmit and/or receive data to/from each other. For example, each of the electronic devices 202 and 204 may use device-to-device (D2D) communication, such as Wi-Fi direct or Bluetooth, (e.g., using communication circuitry (e.g., the communication circuitry 320) supporting the corresponding communication scheme) to establish a communication connection therebetween but, without being limited thereto, may communicate with each other using other various types of communication (e.g., at least one of Wi-Fi communication using access points (APs), cellular communication using base stations, or wired communication).

One (e.g., the first electronic device 202) of the first electronic device 202 and the second electronic device 204 may be a primary device (or a master device or a main device), and the other device (e.g., the second electronic device 204) may be a secondary device (or a slave device or a sub device). The primary device (or the main device) may transmit data to the secondary device. For example, when the first electronic device 202 and the second electronic device 204 establish a communication connection with each other, any one of the first electronic device 202 and the second electronic device 204 may be randomly selected as the primary device, and the other may be selected as the secondary device. In an embodiment, when the first electronic device 202 and the second electronic device 204 establish a communication connection therebetween, the device detected as first worn (e.g., when a value indicating wearing is detected by a wearing detection sensor (e.g., a proximity sensor, a touch sensor, a slope 6-axis sensor, or a 9-axis sensor)) may be selected as the primary device, and the other as the secondary device.

The primary device (e.g., the first electronic device 202) may transmit data received from the electronic device 101 to the secondary device (e.g., the second electronic device 204). For example, the first electronic device 202, which is the primary device, may not only output audio to the speaker 354 based on audio data received from the electronic device 101, but also output the audio data to the second electronic device which is the secondary device. In an embodiment, the second electronic device 204 which is the secondary device may receive, through sniffing, the audio data, transmitted from the electronic device 101 to the primary device (e.g., the first electronic device 202), based on the connection information provided from the primary device (e.g., the first electronic device 202).

The first electronic device 202 which is the primary device may transmit the data (e.g., audio data or control data) received from the second electronic device 204 which is the secondary device to the electronic device 101. For example, when a touch event occurs in the second electronic device 204 which is the secondary device, control data including information about the event may be transmitted to the electronic device 101 by the first electronic device 202 which is the primary device. However, without being limited to those described, the secondary device (e.g., the second electronic device 204) and the electronic device 101 may establish a communication connection therebetween as described above, so that the secondary device and the electronic device 101 may directly perform transmission and/or reception of data therebetween.

The first electronic device 202 may include the same or similar components to at least one of the components (e.g., modules) of the electronic device 101 illustrated in FIG. 1. The first electronic device 202 may include a processor 310 (e.g., the processor 120 of FIG. 1), a communication circuitry 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a microphone 352 (e.g., the input module 150 of FIG. 1), a speaker 354 (e.g., the sound output module 155 of FIG. 1), a power management module 360 (e.g., the power management module 188 of FIG. 1), a battery 370 (e.g., the battery 189 of FIG. 1), an interface 380 (e.g., the interface 177 of FIG. 1), and memory 390 (e.g., the memory 130 of FIG. 1).

The communication circuitry 320 may include at least one of a wireless communication module (e.g., a Bluetooth communication module, a cellular communication module, a wireless-fidelity (Wi-Fi) communication module, a near-field communication (NFC) communication module, or a global navigation satellite system (GNSS) communication module) or a wired communication module (e.g., a local area network (LAN) communication module or a power line communication (PLC) communication module). As an example, the Bluetooth communication module may support at least one communication connection (e.g., communication link) by Bluetooth legacy communication (e.g., Bluetooth classic) and/or Bluetooth low energy (BLE) communication.

The communication circuitry 320 may directly or indirectly communicate with at least one of the electronic device 101 (e.g., a smartphone), the external electronic device 250 (e.g., a charging device, such as a cradle), or the second electronic device 204 (e.g., the secondary earbud) through a first network (e.g., the first network 198 of FIG. 1), using at least one communication module. The second electronic device 204 may be configured in pair with the first electronic device 202. The communication circuitry 320 may include a transmission circuit and a reception circuit configured to support communication with the electronic device 101 and/or the external electronic device 250. The communication module 320 may include one or more communication processors that are operable independently from the processor 310 and supports wired or wireless communication.

The communication circuitry 320 may be connected with one or more antennas for transmitting signals or information to another electronic device (e.g., the electronic device 101, the second electronic device 204, or the external electronic device 250) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by, e.g., the communication circuitry 320. The signal or information may then be transmitted or received between the communication circuitry 320 and another electronic device via the selected at least one antenna.

The input device 330 may be configured to generate various input signals that may be used for operation of the first electronic device 202. The input device 330 may include at least one of a touch pad, a touch panel, or a button.

The input device 330 may generate a user input regarding the turn-on/off of the first electronic device 202. According to an embodiment, the input device 330 may receive a user input for a communication connection between the first electronic device 202 and the second electronic device 204. According to an embodiment, the input device 330 may receive a user input associated with audio data (or audio content). For example, the user input may be associated with functions of starting playback of audio data, pausing playback, stopping playback, adjusting playback speed, adjusting playback volume, or muting.

The sensor 340 may measure or identify the position or operational state of the first electronic device 202. The sensor 340 may convert measured or identified information into an electric signal. The sensor 340 may include at least one of, e.g., a magnetic sensor, an acceleration sensor, a gyro sensor, a geomagnetic sensor, a proximity sensor, a gesture sensor, a grip sensor, a biometric sensor, or an optical sensor.

The processor 310 may detect data (e.g., audio data) from the data packets (e.g., data protocol data units (PDUs)) received from the electronic device 101 and may process the detected data through the audio processing module 350 and output it to the speaker 354. The audio processing module 350 may support an audio data gathering function and reproduce the gathered audio data.

The audio processing module 350 may include an audio decoder (not shown) and a D/A converter (not shown). The audio decoder may convert audio data stored in the memory 390 or received from the electronic device 101 through the communication circuitry 320 into a digital audio signal. The D/A converter may convert the digital audio signal converted by the audio decoder into an analog audio signal. The audio decoder may convert audio data received from the electronic device 101 through the communication circuitry 320 and stored in the memory 390 into a digital audio signal. The speaker 354 may output the analog audio signal converted by the D/A converter.

The audio processing module 350 may include an A/D converter (not shown). The A/D converter may convert the analog audio signal transferred through the microphone 352 (hereinafter, referred to as a mic) into a digital voice signal. The mic 352 may include at least one air conduction microphone and/or at least one bone conduction microphone for detecting voice and/or sound.

The audio processing module 350 may play various audio data set in the operation of the first electronic device 202. For example, the processor 310 may be designed to detect insertion or removal of the first electronic device 202 into/from the user's ear through the sensor 340 and reproduce audio data regarding an effect sound or guide sound through the audio processing module 350. The output of the sound effect or guide sound may be omitted according to the user setting or the designer's intention.

The memory 390 may store various data used by at least one component (e.g., the processor 310 or the sensor 340) of the first electronic device 202. The various data may include, for example, software and input data or output data for a command related thereto. The memory 390 may include a volatile memory or a non-volatile memory.

The power management module 360 may manage power supplied to the first electronic device 202. According to an embodiment, the power management module 360 may be implemented as at least part of, for example, a power management integrated circuit (PMIC). According to an embodiment, the power management module 360 may include a battery charging module. According to an embodiment, if another electronic device (e.g., one of the electronic device 101, the second electronic device 204, or another electronic device) is electrically connected with the first electronic device 202 (wirelessly or wiredly), the power management module 360 may receive power from the other electronic device to charge the battery 370.

The battery 370 may supply power to at least one component of the first electronic device 202. The battery 370 may include, e.g., a rechargeable battery. According to an embodiment, if the first electronic device 202 is mounted in the cradle device (e.g., the third electronic device 250), the first electronic device 202 may charge the battery 370 to a designated charging level and then power on the first electronic device 202 or turn on at least a portion of the communication circuitry 320.

The interface 380 may support one or more designated protocols that may be used for the first electronic device 202 to directly (e.g., wiredly) connect to the electronic device 101, the second electronic device 204, the external electronic device 250, or another electronic device. The interface 380 may include at least one of, e.g., a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the external electronic device 250).

The processor 310 may execute software to control at least one other component (e.g., a hardware or software component) of the first electronic device 202 connected with the processor 310 and may perform various data processing or computations. According to an embodiment, as at least part of the data processing or computation, the processor 310 may load a command or data received from another component (e.g., the sensor 340 or communication circuitry 320) onto a volatile memory 390, process the command or the data stored in the volatile memory 390, and store resulting data in a non-volatile memory.

The processor 310 may establish a communication connection with the electronic device 101 through the communication circuitry 320 and receive data (e.g., audio data) from the electronic device 101 through the established communication connection. The processor 310 may transmit the data, received from the electronic device 101 through the communication circuitry 320, to the second electronic device 204. The processor 310 may perform the operations of the first electronic device 202 which are to be described below. The processor 310 may include a physical layer, a link layer, a host, and an application layer for performing Bluetooth communication.

According to embodiments of the disclosure, the first electronic device 202 may further include various modules depending on the form in which it is provided. There are many variations according to the convergence trend of digital devices, so it is not possible to list them all, but components equivalent to the above-mentioned components may be further included in the first electronic device 202. Further, it is apparent that in the first electronic device 202 according to various embodiments, specific components may be excluded from the above components or replaced with other components according to the form in which it is provided. This will be easily understood by those of ordinary skill in the art.

According to various embodiments, the second electronic device 204 configured in pair with the first electronic device 202 may include the same or similar components as those included in the first electronic device 202 and may perform all or some of the operations of the first electronic device 202 described below in connection with the drawings.

The electronic device 101 may discover at least one of the electronic devices 202 and 204 through a BLE scan and establish a BLE connection with the discovered device. At least one of the electronic devices 202 and 204 may perform BLE advertising to be discovered by the electronic device 101 and establish a BLE connection with the electronic device 101.

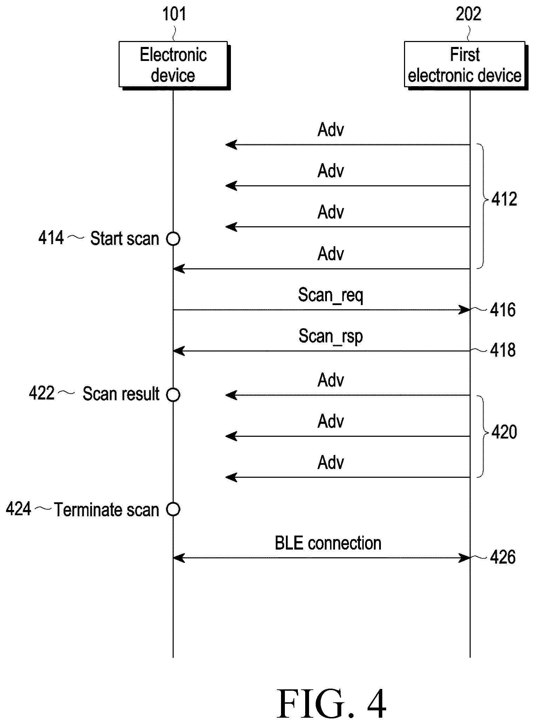

FIG. 4 is a sequence diagram illustrating a Bluetooth LE (BLE) scan operation according to an embodiment of the disclosure.

Referring to FIG. 4, in operation 414, the electronic device 101 may start to perform a scan operation for search for a nearby Bluetooth device based on BLE. In operation 412, the first electronic device 202 may periodically transmit (e.g., multicast or broadcast) advertising data ("Adv") to be discovered by surrounding Bluetooth devices based on BLE. In an embodiment, the advertising data may provide information related to connection or account (e.g., pairing) with the first electronic device 202 to unspecified surrounding electronic devices (e.g., an electronic device 101). In an embodiment, the advertising data may include at least one of identification information of the first electronic device 202, account information of a user, information about whether the first electronic device 202 is paired with another electronic device (not illustrated), a list of devices previously paired with the first electronic device 202, information about devices that may be paired simultaneously, transmission power, sensing area, or remaining battery capacity information.

The first electronic device 202 may start broadcasting the advertising data according to a designated condition. For example, the first electronic device 202 may start periodically broadcasting (e.g., advertising) the advertising data in response to a user input for a pairing request. In an embodiment, the first electronic device 202 may be stored in a cradle device (e.g., an external electronic device 250), and may start broadcasting the advertising data when the cradle device is opened or separated from the cradle device while being stored in the cradle device. In an embodiment, the first electronic device 202 may start broadcasting the advertising data based on at least one of when power is supplied or a designated time period.

The electronic device 101 may receive the advertising data broadcast from the first electronic device 202, and may output a user interface for connection to the first electronic device 202 on a display (e.g., a display module 160). The electronic device 101 may provide the user interface according to various conditions based on information included in the received advertising data. As an example, the user interface may include at least one of an image corresponding to the first electronic device 202, a user account, transmission power, or remaining battery capacity.

In operation 416, the electronic device 101 may transmit a scan request packet (e.g., Scan_req) corresponding to the advertising data received from the first electronic device 202 to the first electronic device 202. In operation 418, the first electronic device 202 may transmit a scan response packet (e.g., Scan_rsp) corresponding to the scan request packet to the electronic device 101. In an embodiment, even during and after the scan request packet of operation 416 and the scan response packet of operation 418 are exchanged, the first electronic device 202 may continue to periodically transmit the advertising data in operation 420.

In operation 422, the electronic device 101 may generate a scan result (e.g., including received signal strength indicator (RSSI)) upon receiving the scan response packet. In an embodiment, the electronic device 101 may terminate the scan operation upon receiving the scan response packet in operation 424. Or, the electronic device 101 may continue the scan operation. In operation 426, the electronic device 101 may establish a BLE-based communication link (e.g., an asynchronous connection-less (ACL) link) with the first electronic device 202. In an embodiment, operation 426 may include transmission of a CONNECT_IND packet and a first data packet.

The BLE communication link may include a plurality of physical channels, e.g., an LE piconet physical channel, an LE advertising physical channel, an advertising periodic physical channel, and an LE isochronous physical channel, which may be optimized and used for their different purposes. The LE piconet physical channel may be used for communication between the connected devices and be connected with a specific piconet. The LE advertising physical channel may be used to broadcast advertising (advertisements) to the Bluetooth device. The advertising may be used to discover user data, connect, or send user data to the counterpart electronic device. The advertising periodical physical channel may be used to transmit user data to the counterpart electronic device 101 at specific intervals through periodic advertising. The LE isochronous physical channel may be used to transfer isochronous data between Bluetooth devices in an LE piconet, or to transfer isochronous data between unconnected Bluetooth devices.

An electronic device (e.g., the electronic device 101, the first electronic device 202, or the second electronic device 204) having a Bluetooth core version of 5.2 or higher may support an audio service through a connected isochronous stream (CIS) scheme and/or a broadcast isochronous stream (BIS) based on Bluetooth communication technology.

CIS may refer to logical transport that allows an electronic device (e.g., the electronic device 101, the first electronic device 202, or the second electronic device 204) to transmit isochronous data in any direction. CIS may carry data (e.g., CIS data packets) of a fixed or variable size, and each CIS link may be associated with an ACL link. The CIS link may support transmission of variable-sized packets and one or more packets in each isochronous event, and may support a variety of data rates. Data traffic on the CIS link may be unidirectional or bidirectional, and an acknowledgment protocol may be used to enhance the reliability of data transfer on the CIS link.

BIS may refer to logical transport used to transmit one or more isochronous data streams to all devices (e.g., the electronic device 101, the first electronic device 202, or the second electronic device 204) for BIS within a specified range. The BIS may include one or more sub events for transmitting isochronous data packets (e.g., BIS data packets). The BIS may support transmission of several new isochronous data packets in all BIS events. The BIS does not include an acknowledgment protocol, and may be transmitted unidirectionally from a broadcasting device (e.g., the source electronic device 500) that broadcasts traffic.

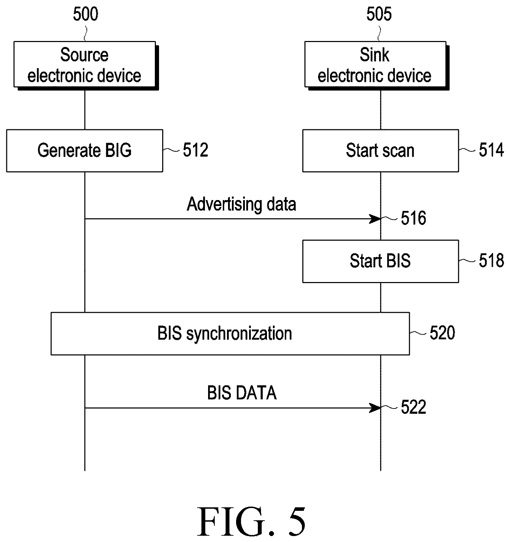

To enhance reliability of BIS logical transmission, isochronous data packets may be unconditionally retransmitted by increasing the number of sub events in all events. Transmission reliability may be enhanced by transmitting the isochronous data packets at an interval preceding an interval related to the isochronous data packets. This is referred to as pre-transmission. The BIS may be identified by a unique access address and timing information. The access address and timing information may be transmitted through advertising data (e.g., the AUX_SYNC_IND packet) transmitted using a corresponding periodic advertising broadcast logical transmission. A scanning device (e.g., the sink electronic device 505 of FIG. 5) supporting a synchronized receiver role (e.g., a sink role) may receive isochronous data (e.g., isochronous data packets) from the BIS after synchronizing with the BIS using the timing information obtained from periodic advertising data (e.g., the AUX_SYNC_IND packet).

Each BIS may be part of a broadcast isochronous group (BIG). The BIG may include one or more BISs having the same isochronous interval (e.g., ISO_Interval). BISs in the BIG have a common timing reference based on the source electronic device (e.g., the source electronic device 500 of FIG. 5), and may be temporally synchronized with each other. The maximum number of BISs in the BIG may have a designated value (e.g., 31). BIG may also include control sub events.

FIG. 5 is a sequence diagram illustrating a procedure for synchronizing with a broadcast isochronous group (BIG), according to an embodiment of the disclosure.

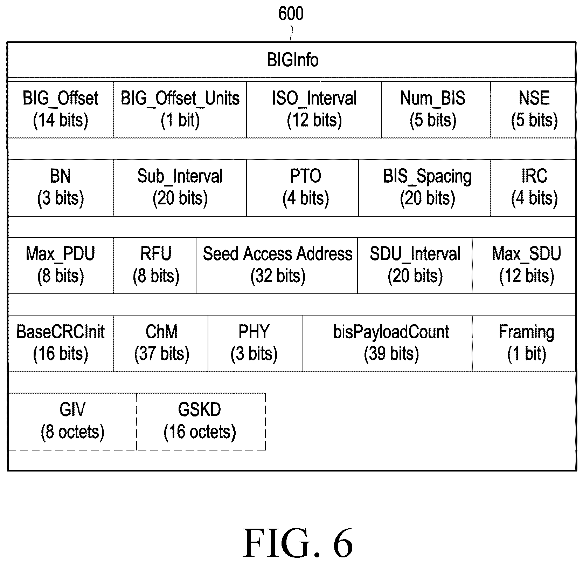

Referring to FIG. 5, in operation 512, the source electronic device 500 may generate a broadcast isochronous group (BIG) including one or more BISs and generate at least one advertising data (e.g., AUX_SYNC_IND) including BIG information (e.g., BIG information 600 of FIG. 6) related to the BIG. In operation 514, for reception synchronization, the sink electronic device 505 (e.g., at least one of the electronic device 101, the first electronic device 202, or a second electronic device 204) may start BLE scan (e.g., BIS scan).

In operation 516, the source electronic device 500 may perform periodic advertising that broadcasts advertising data related to the BIG periodically at designated intervals. The advertising data may include extended advertising (EA) data such as AUX_EXT_IND packet and/or AUX_ADV_IND packet, and periodic advertising (PA) data such as AUX_SYNC_IND packet. The AUX_EXT_IND packet is transmitted through a common channel and may indicate a transmission position of the AUX_ADV_IND packet. The AUX_ADV_IND packet is transmitted according to a specific channel map identified by the AUX_EXT_IND packet, and may indicate a position of the AUX_SYNC_IND packet which is PA. An electronic device (e.g., the sink electronic device 505) that has obtained information of the AUX_ADV_IND packet may receive the AUX_SYNC_IND packet. The AUX_SYNC_IND may include BIG information (e.g., the BIG information 600 of FIG. 6) in, e.g., an additional controller advertising data (ACAD) field. The BIG information may include BIG parameters used to synchronize to a BIG (e.g., at least one BIS) provided by the source electronic device 500.

In an embodiment, the sink electronic device 505 may receive the advertising data through BLE scan (or BIS assistant) of operation 514 and obtain BIG information (e.g., BIG information 600) from the advertising data. In an embodiment, the sink electronic device 505 (e.g., the electronic device 101) may receive synchronization information (e.g., contents of LL_PERIODIC_SYNC_IND packet) necessary to receive BIG information 600 from the source electronic device 500, and may deliver the synchronization information to an external electronic device (e.g., the first electronic device 202 or the second electronic device 204). In an embodiment, the sink electronic device 505 (e.g., the first electronic device 202 or the second electronic device 204) may receive the advertising data from the source electronic device 500 based on synchronization information received from an external electronic device (not illustrated) (e.g., the electronic device 101) operating as a BIS assistant role without performing BLE scan, and obtain BIG information (e.g., BIG information 600) from the advertising data.

In operation 518, the sink electronic device 505 may determine to start receiving the BIS based on the BIG information. In operation 520, the sink electronic device 505 may synchronize to a BIG (e.g., at least one BIS) of the source electronic device 500 using BIG parameters included in the BIG information. In an embodiment, a BIG synchronization operation performed by the sink electronic device 505 may include an operation of calculating access address and timing information through which BIS audio data is transmitted based on the BIG information. In an embodiment, the timing information may indicate the times of transmission of the audio data and the channel information (e.g., a channel map).

In operation 522, the sink electronic device 505 may receive audio data (e.g., BIS data packets) broadcast by the source electronic device 500 through at least one BIS in the BIG.

FIG. 6 is a view illustrating BIG parameters according to an embodiment of the disclosure.

Referring to FIG. 6, the BIG information 600 may include BIG parameters, such as at least one of BIG_Offset, BIG_Offset_units, ISO_Interval, Num_BIS, number of sub event (NSE), burst number (BN), Sub_Interval, pre-transmission offset (PTO), BIS_Spacing, immediate repetition count (IRC), Max_PDU, reserved for future use (RFU), SeedAccessAddress, SDU_Interval, Max_SDU, BaseCRCInit, channel map (ChM), physical (PHY), bisPayloadCount, Framing, group initialization vector (GIV), or group session key derivation (GSKD). In an embodiment, the length of the BIG information 600 may be 33 octets when not encrypted, and 57 octets when encrypted.

BIG parameters that may be included in the BIG information 600 will be described below.

Num_BIS indicates the number of BISs in the BIG. Each of the BISs in the BIG may be assigned a different BIS_Number from 1 to Num_BIS.

ISO_Interval may indicate a time of 1.25 ms between two adjacent BIG anchor points. (e.g. 5ms to 4s)

BIS_Spacing may indicate the time between the start time of the sub events in adjacent BISs in the BIG and the start time of the first sub event of the last BIS.

Sub_Interval may indicate the time between start times of two consecutive sub events of each BIS.

Max_PDU is the maximum number of data octets capable of transmitting each BIS data packet within the BIG and may indicate the maximum duration of the packet. (e.g. 1 to 251 octets)

Max_SDU may indicate the maximum size (e.g., maximum duration) of the service data unit (SDU) in the BIG. (e.g. 1 to 4095 octets)

BN, PTO, and IRC may include values for controlling which data is transmitted in each BIG event. Subevents of each BIS event may be divided into groups (e.g., sub event groups) including BN sub events. Thus, the group count (GC)) is NSE/BN. IRC may designate the number of groups carrying data related to the current BIS event. The remaining groups may carry data related to future BIS events designated by the PTO.

IRC may be greater than 0 and may not be greater than GC. If IRC = GC, the PTO may be ignored, otherwise the PTO may be greater than zero. Groups of sub events may be sequentially numbered (e.g., group index g) from 0 to GC-1. When g < IRC, the group g may include data related to the current BIS event. When g >= IRC, group g may include data related to a future BIS event (e.g., PTO * (g - IRC + 1)th BIS event) after the current BIS event.

The NSE indicates the maximum number of sub events within each BIG event.

The framing field may indicate whether the BIG transmits framed data or unframed data.

BIG_Offset may indicate the time from the start time of the packet (e.g., AUX_SYNC_IND of operation 516) including the BIG information 600 to the next BIG anchor point. The value of BIG_Offset may be indicated in units indicated by bits of BIG_Offset_Units. The time offset is determined by multiplying the value of BIG_Offset by the unit indicated by BIG_Offset_Units. The time offset may be greater than 600 µs (micro second). When the bit of BIG_Offset_Units is set, the unit is 300 µs, otherwise 30 µs. The bit of BIG_Offset_Units may not be set if the time offset is less than 491,460 µs. The BIG anchor point may be between the time offset and the time offset plus 1 unit after the start time of the packet (e.g., AUX_SYNC_IND) as follows.

The parameters included in the BIG information 600 may not be changed during the lifetime of the BIG.

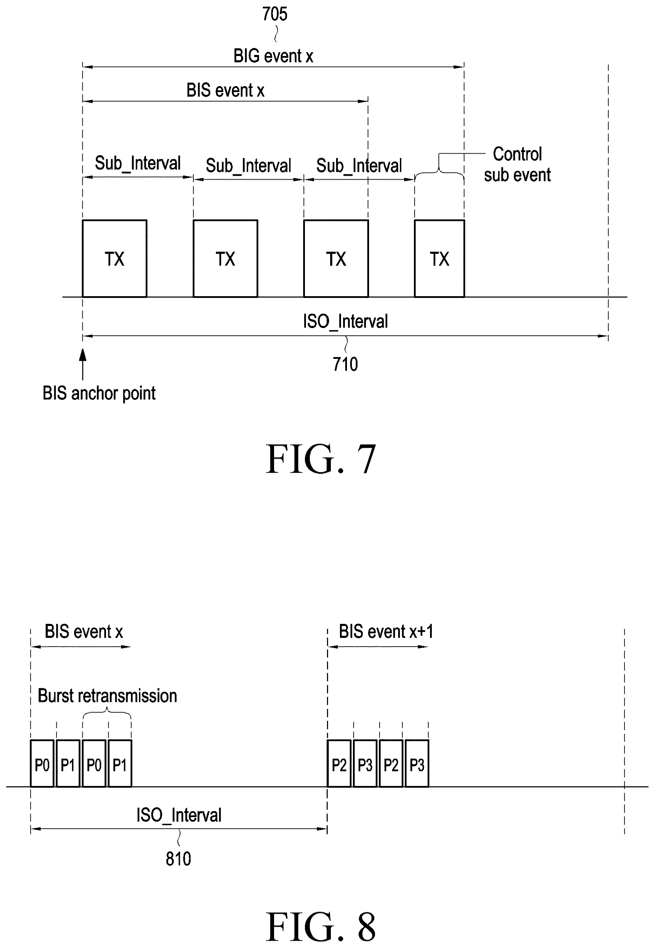

FIG. 7 is a view illustrating a BIG event and a BIS event according to an embodiment of the disclosure;
Referring to FIG. 7, a BIG event (e.g., the BIG event x 705) may include one or more BIS data packets (e.g., PDUs). The source electronic device (e.g., the source electronic device 500) may transmit BIS data packets in BIG events (e.g., BIG event x 705). Each BIG event (e.g., BIG event x 705) may be divided into Num_BIS BIS events and, if present, one control sub event. Each BIS event may be divided into NSE sub events.

Each BIS event may start at the BIS anchor point and end after the last sub event. Each BIG event (e.g., the BIG event x 705) may start at the BIG anchor point and, if there is a control sub event, it may end thereafter, otherwise, end at the last constituent BIS event. The BIG anchor points may be regularly spaced apart by an interval of ISO_Interval 710. The BIS anchor points for BIS n of the BIG may be after (n - 1) × BIS_Spacing from the BIG anchor points, and may be regularly spaced apart by ISO_Interval 710. The sub events of each BIS may be spaced apart by Sub_Interval. The source electronic device (e.g., the source electronic device 500) may terminate the current BIG event (e.g., the BIG event x 705), at least T_IFS (time for inter frame space) (e.g., 150 µs) before the BIG anchor point of the next BIG event. The time interval between two consecutive packets on the same channel may be referred to as T_IFS. T_IFS may be defined as the time from the end point of the last bit of the previous packet to the start point of the first bit of the subsequent packet.

BISs in the BIG may be arranged sequentially or interleaved according to Sub_Interval and BIS_Spacing. In the case of sequential arrangement, BIS_Spacing may be greater than or equal to NSE X Sub_Interval, and all sub events of the BIS event may occur together. When interleaved, Sub_Interval may be Num_BIS X BIS_Spacing, the first sub events of all BISs may be adjacent, and the second sub events of all the following BISs may be adjacent.

The maximum length possible for the data portion (except for the control sub event) of the BIG event may be represented as BIG_Sync_Delay. The value of BIG_Sync_Delay may be the same as the time from the BIS anchor point to the BIG synchronization point, which is the end point of the packet including the payload of the Max_PDU octet transmitted in the last sub event. (BIG_Sync_Delay = (Num_BIS - 1) X BIS_Spacing + (NSE - 1) X Sub_Interval + MPT)

The BIS sub event is an opportunity for the source electronic device 500 to transmit BIS data packets and for the sink electronic device 505 (e.g., the electronic device 101, the first electronic device 202 and/or the second electronic device 204) operating as a sink to receive the BIS data packets. The source electronic device 500 may transmit one BIS data packet at a time point at which each BIS sub event of the BIS event starts, and may transmit, e.g., at least one BIS packet within six consecutive BIS events.

For each BIS event, the source electronic device 500 may provide a data burst including BN payloads. Each payload may include a single fragment or one or more SDU segments. One data burst is related to a designated BIS event, but may be transmitted in earlier events.

FIGS. 8, 9, and 10 are views illustrating retransmission of BIS data packets according to embodiments of the disclosure.

Referring to FIG. 8, payloads may be allocated to BIS sub-events in each BIS event in a BIS having BN=2, IRC=2, PTO=0, and NSE=4. One BIS event corresponding to ISO_Interval 810 may include up to NSE(=4) BIS sub-events. BIS data packets (e.g., P0, P1, or P2, P3) each including two payloads in each BIS event (e.g., BIS event x or BIS event x+1) may be allocated to two preceding BIS sub-events, and the remaining sub-events may be used for retransmission of the same BIS data packets (e.g., P0, P1, or P2, P3).

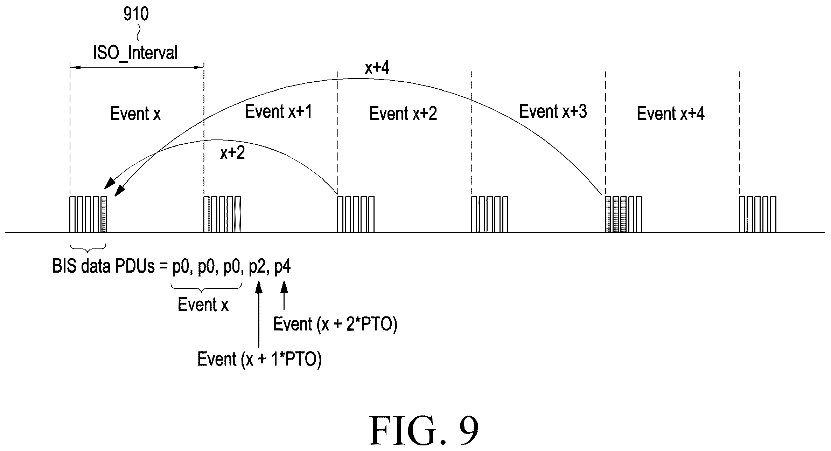

Referring to FIG. 9, payloads may be allocated to BIS sub-events in each BIS event in a BIS having BN=1, IRC=3, PTO=2, and NSE=5. One BIS event corresponding to ISO_Interval 910 may include up to NSE(=5) BIS sub-events. Within the BIS event x, the BIS data packet p0 may be transmitted in three preceding BIS sub-events, the BIS data packet p2 for the BIS event x+2 may be transmitted in the fourth BIS sub-event, and the BIS data packet p4 for the BIS event x+4 may be transmitted in the last BIS sub-event. Accordingly, the BIS data packet p2 may be repeatedly transmitted in the BIS event x and the BIS event x+2, and the BIS data packet p4 may be repeatedly transmitted in the BIS event x and the BIS event x+4.

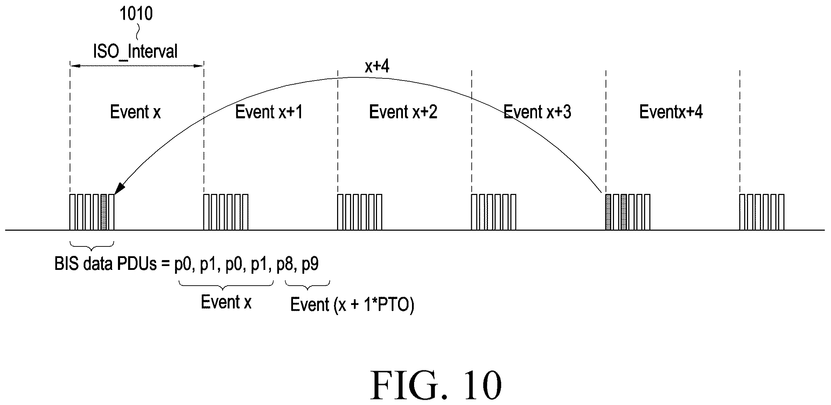

Referring to FIG. 10, payloads may be allocated to BIS sub-events in each BIS event in a BIS having BN=2, IRC=2, PTO=4, and NSE=6. One BIS event corresponding to ISO_Interval 1010 may include up to NSE(=6) BIS sub-events. Within the BIS event x, the BIS data packets p0 and p1 may be transmitted in four previous BIS sub-events, and in the last two BIS sub-events, the BIS data packets p8 and p9 for the BIS event x+4 may be transmitted. Accordingly, the BIS data packets p8 and p9 may be repeatedly transmitted in the BIS event x and the BIS event x+4.

Among various Bluetooth topologies, the first electronic device 202 and the second electronic device 204 included in an ear-wearable device (e.g., the electronic device 102) such as TWS may receive audio data of different channels (e.g., a right channel and a left channel) of the same audio service. For example, the second electronic device 204 may receive at least a portion of audio data received by the first electronic device 202 from an external electronic device (e.g., the electronic device 101) from the first electronic device 202. For example, in the BLE audio topology, the first electronic device 202 and the second electronic device 204 may use an audio service from an external electronic device (e.g., the electronic device 101 or the source electronic device 500).

The first electronic device 202 and the second electronic device 204 may communicate with each other for various purposes, such as exchanging states with each other and/or changing operating parameters, and the communication may be referred to as bridge communication. For example, in ear-wearable devices such as TWS, each of the first electronic device 202 corresponding to a right channel and the second electronic device 204 corresponding to a left channel may obtain information about a communication state (e.g., communication degradation circumstance) of a counterpart electronic device through bridge communication (e.g., inter-TWS communication). In an embodiment, the first electronic device 202 and the second electronic device 204 may use a fixedly limited communication time (e.g., communication time between TWSs) on a communication link for bridge communication while using an audio service on a connection basis or non-connection basis with an external electronic device (e.g., the electronic device 101).

According to operation of Bluetooth communication, a peripheral electronic device (e.g., the first electronic device 202 or the second electronic device 204) may activate (e.g., open) a reception circuit (e.g., a reception circuit of the communication circuitry 320) at a specific period and specific times (e.g., slots) to receive data packets transmitted from a central electronic device (e.g., the electronic device 101). The first electronic device 202, which has a peripheral role for a central electronic device (e.g., the electronic device 101) while simultaneously maintaining a communication link for bridge communication with a secondary electronic device (e.g., the second electronic device 204), may allocate a portion of wireless link resources available for receiving data packets from the electronic device 101 for a communication link with the second electronic device 204.

A source electronic device (e.g., the source electronic device 500) that provides an audio service may transmit audio data to one or more surrounding sink electronic devices (e.g., the first electronic device 202 and/or the second electronic device 204) using at least one BIS, and the sink electronic devices may simultaneously output the audio data. The source electronic device 500 may provide an audio service (e.g., BIS audio service) to surrounding sink electronic devices (e.g., the first electronic device 202 and/or the second electronic device 204) using the same parameters and timing.

The BIS audio service may have constraints on time occupancy in consideration of other communication tasks (e.g., Wi-Fi coexistence (CoEX) operation or Bluetooth concurrency operation) that may be performed in the source electronic device 500 using the same or similar frequency band as the BIS audio service. Accordingly, the BIS audio service may have a lower packet transmission rate or lower time occupancy compared to connection-based connected isochronous stream (CIS) communication or Bluetooth legacy communication, and thus quality of the BIS audio service may be difficult to maintain in a time period when there is temporary communication degradation due to wireless environment or overlapping scheduling of an external electronic device (not illustrated).

The source electronic device 500 does not maintain communication links with sink electronic devices (e.g., the first electronic device 202 and the second electronic device 204), but may continuously transmit audio data for an audio service. Further, the source electronic device 500 may allocate resources (e.g., time periods) for the BIS audio service in consideration of scheduling of other communication tasks (e.g., other Bluetooth communication other than the BIS audio service (e.g., Bluetooth concurrency operation) and/or Wi-Fi coexistence (CoEX) operation). The Bluetooth concurrency operation may include at least one of maintaining connection to another external electronic device (not illustrated) using Bluetooth communication, scan, or advertising. The Wi-Fi coexistence operation may include transmission and/or reception of data traffic through Wi-Fi.

The source electronic device 500 may allocate resources (e.g., BIS time periods) at a level of a portion (e.g., 50-60%) of total resources (e.g., periodic time intervals) to the BIS audio service for sink electronic devices (e.g., the first electronic device 202 and/or the second electronic device 204) to perform scheduled other communication tasks (e.g., Bluetooth concurrency operation and/or Wi-Fi coexistence operation). The occupancy rate (e.g., 50-60%) may be relatively small compared to occupancy rates of Bluetooth legacy or audio service through CIS.

The sink electronic devices (e.g., the first electronic device 202 and/or the second electronic device 204) may receive audio data through BIS according to limited resources (e.g., BIS time periods) operated by the source electronic device 500. The sink electronic devices may include, e.g., the first electronic device 202 that receives right audio data (e.g., R packets) of a right channel and the second electronic device 204 that receives left audio data (e.g., L packets) of a left channel. While the sink electronic devices receive audio data, when communication degradation occurs due to changes in surrounding communication environment, physical obstacles, or scheduling of other communication tasks (e.g., Bluetooth concurrency operation and/or Wi-Fi coexistence operation) and some audio data is missed, the sink electronic devices may not be able to receive the missed audio data again, which may lead to quality degradation of the audio service.

Embodiments of the disclosure are intended to overcome limitations of limited resources and enhance reception success rate of audio data when performing an audio service using BIS, and the source electronic device 500 may allocate time resources (e.g., a first time period) for the BIS when generating the BIS, and transmit additional audio data in idle periods. A source electronic device may operate BIS operation and, when no communication task unrelated to BIS is scheduled in a time period when BIS audio data is not allocated, additionally transmit BIS audio data in the time period, thereby increasing time occupancy of BIS and providing stable BIS audio service.

Embodiments of the disclosure may be related to a source electronic device providing BIS audio service allocating basic resources (e.g., a first time period) for BIS for a first external electronic device (e.g., the first electronic device 202) and one or more sink electronic devices (e.g., the second electronic device 204), setting and allocating additional resources (e.g., a third time period) for additional transmission of BIS among idle resources (e.g., a second time period) that may be used for other communication tasks other than the BIS audio service, and notifying the first external electronic device (e.g., the first electronic device 202) that the additional transmission and/or the additional resources are present.

Embodiments of the disclosure may define priorities of BIS operation, operation for additional transmission of BIS, and other communication tasks (e.g., Wi-Fi coexistence operation and/or Bluetooth concurrency operation), and determine resource allocation for the scheduled operations by comparing priorities of the scheduled operations. Embodiments of the disclosure may provide an additional audio service including additional transmission of the audio service to enhance efficiency of the audio service even during surrounding environment degradation or scheduling of other communication tasks, while ensuring basic audio service through BIS to external electronic devices.

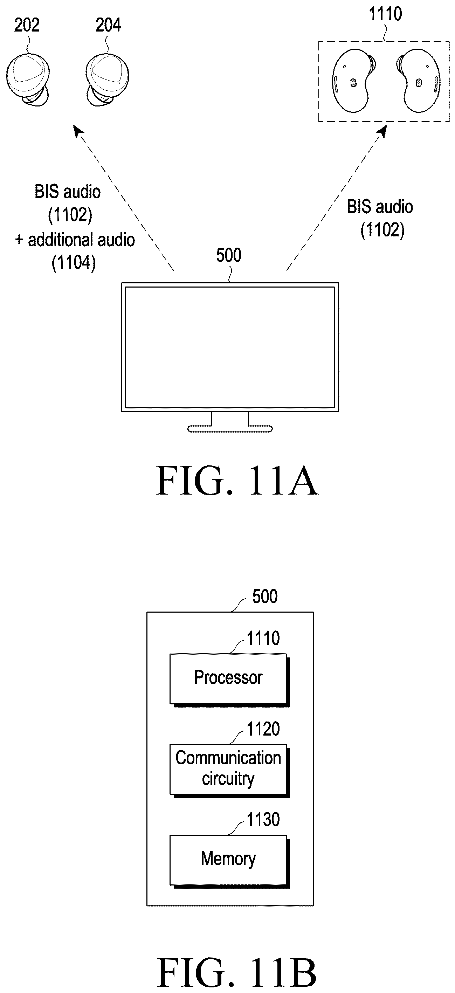

FIG. 11A is a view illustrating an audio service according to an embodiment of the disclosure.

Referring to FIG. 11A, the source electronic device 500 may provide BIS audio data 1102 of a BIS audio service to a first external electronic device (e.g., the first electronic device 202 and/or the second electronic device 204) and at least one second external electronic device 1110 (e.g., earbuds, wireless earphones, or a Bluetooth speaker device). The source electronic device 500 may define respective priorities for BIS operation, Bluetooth concurrency operation, and Wi-Fi coexistence operation, and may operate communication resources based on the priorities. The source electronic device 500 may transmit additional audio data 1104 of BIS according to operation of resources, and may notify a first external electronic device (e.g., the first electronic device 202) that the additional audio data 1104 is present.

In an embodiment, the source electronic device 500 may be implemented as a mobile phone or TV that supports BIS-based audio service and may operate as a BIS source role, and may transmit audio data (e.g., second audio data) in additional time (e.g., a third time period).

A first external electronic device (e.g., the first electronic device 202) may receive BIS audio data 1102 from the source electronic device 500. The first external electronic device (e.g., the first electronic device 202) may define respective priorities for BIS operation, Bluetooth concurrency operation, and Wi-Fi coexistence operation, and may operate communication resources based on the priorities. The first external electronic device (e.g., the first electronic device 202) may receive information (e.g., additional audio information) indicating that there is transmission of additional audio data 1104 from the source electronic device 500, and may use additional resources (e.g., a third time period) for transmission of the additional audio data 1104. In an embodiment, the first external electronic device (e.g., the first electronic device 202) may be implemented as earbuds that may operate as a BIS sink role.

A second external electronic device 1110 may receive BIG information (e.g., the BIG information 600 of FIG. 6) from the source electronic device 500 and receive BIS audio data 1102 based on the BIG information, but may not receive additional audio information transmitted by the source electronic device 500 or may not interpret the additional audio information. Accordingly, the second external electronic device 1110 may not know existence of the additional audio data 1104 in additional resources (e.g., a third time period) and thus may not receive the additional audio data 1104.

FIG. 11B is a view illustrating a configuration of a source electronic device according to an embodiment of the disclosure.

Referring to FIG. 11B, a source electronic device 500 may include a processor 1110, communication circuitry 1120, and memory 1130. The source electronic device 500 may support at least one of long term evolution (LTE), Zigbee, Z-Wave, Wi-Fi, Bluetooth low energy (BLE), and/or UWB through the communication circuitry 1120. The source electronic device 500 may include a communication circuitry 1120 (e.g., the communication module 190 of FIG. 1) that transmits audio data to sink electronic devices (e.g., the first electronic device 202 and/or the second electronic device 204). In an embodiment, one or more antennas (not shown) may be implemented as part of the communication circuitry 1120.

The communication circuitry 1120 may include one or more communication circuits, and the plurality of communication circuits may include a communication circuit based on LTE, Bluetooth legacy, BLE, UWB, Zigbee, Z-wave, and/or Wi-Fi. According to an embodiment, the communication circuitry 1120 does not include a separate communication circuit based on each of LTE, Bluetooth legacy, BLE, UWB, Zigbee, Z-wave, and/or Wi-Fi, but may include a communication circuit that is based on at least two of LTE, BLE, UWB, Zigbee, Z-wave, and/or Wi-Fi, or all of LTE, BLE, UWB, Zigbee, Z-wave, and/or Wi-Fi.

The source electronic device 500 may include a processor 1110 (e.g., the processor 120 of FIG. 1) that may be implemented with one or more single-core processors or one or more multi-core processors, and memory 1130 (e.g., the memory 130 of FIG. 1) that stores instructions for operating the source electronic device 500. The memory 1130 may store related data (e.g., audio data) and parameters (e.g., BIG parameters) for providing the BIS audio service.

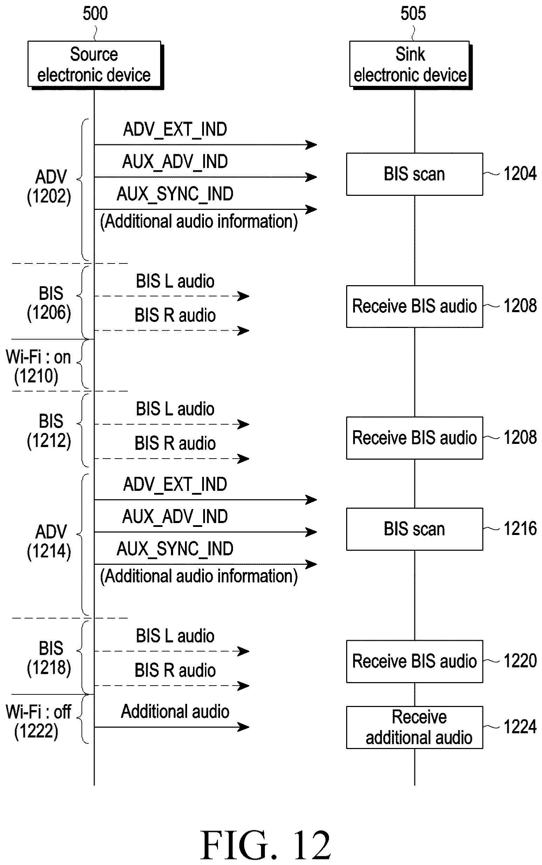

FIG. 12 illustrates a sequence diagram illustrating a procedure for providing a BIS audio service according to an embodiment of the disclosure.

Referring to FIG. 12, in operation 1202, the source electronic device 500 may periodically transmit advertising data (e.g., at least one of ADV_EXT_IND, AUX_ADV_IND, or AUX_SYNC_IND). In an embodiment, AUX_SYNC_IND may include first information (e.g., BIG information 600 including BIG parameters) related to a BIS audio service, along with second information (e.g., additional audio information 2300 or 2402) related to additional transmission of the BIS audio service.

In operation 1204, the sink electronic device 505 may receive the advertising data (e.g., at least one of ADV_EXT_IND, AUX_ADV_IND, or AUX_SYNC_IND) through scan. In an embodiment, when the sink electronic device 505 already has synchronization information necessary to receive AUX_SYNC_IND, it may directly receive AUX_SYNC_IND without receiving ADV_EXT_IND and/or AUX_ADV_IND. In an embodiment, the sink electronic device 505 may receive AUX_SYNC_IND and obtain first information (e.g., BIG information 600 including BIG parameters) along with second information (e.g., additional audio information) related to additional transmission of the BIS from the AUX_SYNC_IND. In an embodiment, the additional audio information may include information indicating that additional audio data related to the BIS audio service is present, and/or information related to resources (e.g., a third time period) through which the additional audio data is transmitted.

In operation 1206, the source electronic device 500 may transmit BIS audio data (e.g., left (L) audio packets and right (R) audio packets or stereo audio packets including left and right audio data) through resources (e.g., a first time period) designated for BIS. In operation 1208, the sink electronic device 505 may receive the BIS audio data based on the BIG information.

In operation 1210, the source electronic device 500 may perform another communication task (e.g., Wi-Fi operation) in remaining time periods (e.g., a second time period) except for a first time period designated for BIS within a designated interval (e.g., ISO_Interval). The Wi-Fi operation may include data transmission and/or reception using Wi-Fi. In an embodiment, the source electronic device 500 may perform the Wi-Fi operation in a second time period based on identifying that the Wi-Fi operation has a higher priority than the additional audio data.

In operation 1212, the source electronic device 500 may transmit BIS audio data (e.g., left (L) audio packets and right (R) audio packets) during a first time period. Although not illustrated, the sink electronic device 505 may continue to receive the BIS audio data based on the BIG information.

In operation 1214, the source electronic device 500 may periodically transmit advertising data (e.g., at least one of ADV_EXT_IND, AUX_ADV_IND, or AUX_SYNC_IND). In an embodiment, AUX_SYNC_IND may include BIG information (e.g., BIG parameters) related to a BIS audio service, along with additional audio information related to the BIS audio service. In an embodiment, the additional audio information of operation 1214 may be the same as or different from the additional audio information of operation 1202. The source electronic device 500 may indicate whether additional audio is present in the additional audio information according to whether another communication task scheduled in a second time period of a current interval is present. In an embodiment, the source electronic device 500 may indicate that additional audio is not present in the additional audio information of operation 1202 based on Wi-Fi function being on (or Wi-Fi communication task being scheduled). In an embodiment, the source electronic device 500 may indicate that additional audio is present in the additional audio information of operation 1214 based on Wi-Fi function being off (or no other communication task being scheduled).

In operation 1216, the sink electronic device 505 may receive the advertising data (e.g., at least one of ADV_EXT_IND, AUX_ADV_IND, or AUX_SYNC_IND) through scan. In an embodiment, after starting BIS audio reception, the sink electronic device 505 may periodically receive only AUX_SYNC_IND without receiving ADV_EXT_IND and/or AUX_ADV_IND. In an embodiment, the sink electronic device 505 may obtain BIG information (e.g., BIG parameters) along with additional audio information related to the BIS from AUX_SYNC_IND.

In operation 1218, the source electronic device 500 may transmit BIS audio data (e.g., left (L) audio packets and right (R) audio packets) through resources (e.g., a first time period) designated for BIS. In operation 1220, the sink electronic device 505 may receive the BIS audio data based on the BIG information.

In operation 1222, when no other communication task is scheduled for remaining time periods (e.g., a second time period) except for a first time period designated for BIS (e.g., when Wi-Fi function is off), the source electronic device 500 may transmit additional audio data related to the BIS audio service during a third time period within the second time period. In an embodiment, the additional audio data may include retransmission of at least a portion of the BIS audio data transmitted in operation 1218. In an embodiment, the additional audio data may include next BIS audio data subsequent to the BIS audio data transmitted in operation 1218.

In operation 1224, the sink electronic device 505 may receive the additional audio data during a third time period based on the additional audio information obtained in operation 1216.

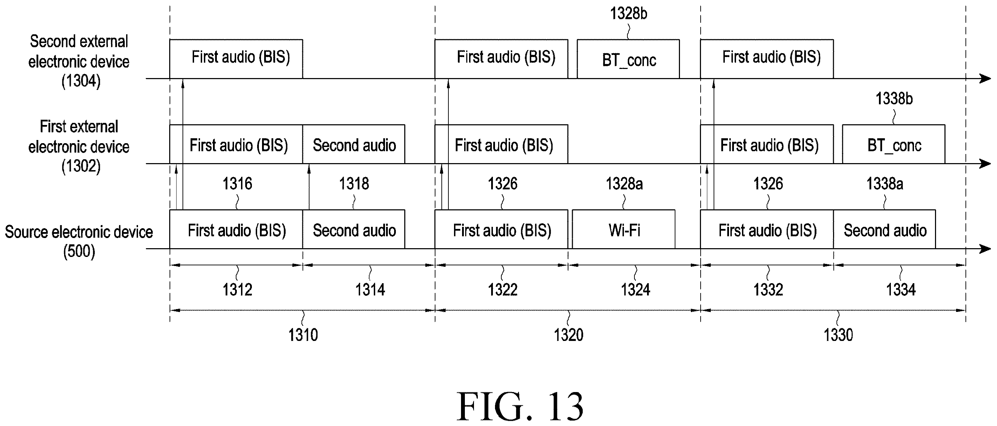

FIG. 13 illustrates a timing diagram illustrating a BIS audio service according to an embodiment of the disclosure.

Referring to FIG. 13, the source electronic device 500 may designate first time periods (e.g., time periods 1312, 1322, and 1332) that are portions of designated periodic intervals (e.g., intervals 1310, 1320, and 1330) for audio data (e.g., first audio data) of a BIS audio service, and may use remaining second time periods (e.g., time periods 1314, 1324, and 1334) except for the first time periods within the intervals for an additional audio service (e.g., transmission of second audio data related to the first audio data) related to the BIS audio service.

A first external electronic device 1302 (e.g., the first electronic device 202) may receive first information (e.g., BIG information 600) related to a BIG audio service along with second information (e.g., additional audio information) related to additional transmission of the BIG audio service from the source electronic device 500, and may determine that additional audio data (e.g., second audio data 1318 or second audio data 1338a) may be present within second time periods (e.g., time periods 1314, 1324, and 1334) based on the second information. A second external electronic device 1304 (e.g., the second external electronic device 1110) that has not received additional audio information or does not have capability to interpret additional audio information may not know possibility of existence of the second audio data 1318 in second time periods (e.g., time periods 1314, 1324, and 1334).

In a first time period 1312 within an interval 1310, the source electronic device 500 may transmit first audio data 1316 related to a BIS audio service, and may transmit second audio data 1318 related to the BIS audio service within a second time period 1314. In an embodiment, the first audio data 1316 may include one or more first audio data packets, and the first audio data packets may be transmitted in one or more sub events within the first time period 1312. In an embodiment, the second audio data 1318 may include retransmission of at least a portion of the first audio data 1316, or subsequent audio data to the first audio data 1316. In an embodiment, the second audio data 1318 may include one or more second audio data packets, and the second audio data packets may be transmitted in one or more sub events within the second time period 1314. The first external electronic device 1302 may receive the first audio data 1316 in the first time period 1312, and may receive the second audio data 1318 in the second time period 1314. The second external electronic device 1304 may receive the first audio data 1316 in the first time period 1312, but may not know existence of the second audio data 1318 in the second time period 1314.

In a first time period 1322 within an interval 1320, the source electronic device 500 may transmit first audio data 1326 related to a BIS audio service, and may perform a Wi-Fi operation 1328a in a second time period 1324. In an embodiment, the source electronic device 500 may perform the Wi-Fi operation 1328a in the second time period 1324 based on identifying that the Wi-Fi operation 1328a has a higher priority compared to an additional audio service. In an embodiment, the Wi-Fi operation 1328a may include an operation of the source electronic device 500 transmitting or receiving data with an external electronic device (not illustrated) through Wi-Fi.

The first external electronic device 1302 may receive the first audio data 1326 in the first time period 1322, and may monitor reception of audio data in the second time period 1324 according to additional audio information, but may fail in audio reception because the source electronic device 500 does not transmit audio data in the second time period 1324 (or because it performs the Wi-Fi operation 1328a). The second external electronic device 1304 may receive the first audio data 1326 in the first time period 1322, but may not monitor audio reception because it does not know existence of audio data in the second time period 1324. The second external electronic device 1304 may perform a Bluetooth concurrency operation 1328b in the second time period 1324 when the scheduled Bluetooth concurrency operation 1328b is present for the second time period 1324. The Bluetooth concurrency operation 1328b may include, e.g., scan or advertising.

In a first time period 1332 within an interval 1330, the source electronic device 500 may transmit first audio data 1336 related to a BIS audio service, and may transmit second audio data 1338a related to the BIS audio service within a second time period 1334. In an embodiment, the second audio data 1338a may include retransmission of at least a portion of the first audio data 1336, or subsequent audio data to the first audio data 1336. The first external electronic device 1302 may receive the first audio data 1336 in the first time period 1332.

The first external electronic device 1302 may know existence of the second audio data 1338a in the second time period 1334 based on additional audio information received along with BIG information from the source electronic device 500, but may perform another communication task (e.g., Bluetooth concurrency operation (BT_conc) 1338b) instead of receiving the second audio data 1338a. In an embodiment, the first external electronic device 1302 may perform the Bluetooth concurrency operation 1338b in the second time period 1334 based on identifying that the Bluetooth concurrency operation 1338b has a higher priority compared to an additional audio service. The Bluetooth concurrency operation 1338b may include, e.g., at least one of inquiry, inquiry scan, page, page scan, BLE scan, BLE advertising, or Bluetooth/BLE connection maintenance operation.

The second external electronic device 1304 may receive the first audio data 1336 in the first time period 1332, but may not know existence of the second audio data 1338a in the second time period 1334. The second external electronic device 1304 may not perform any BIS reception operation in the second time period 1334, or may perform scheduled other communication tasks (not illustrated).

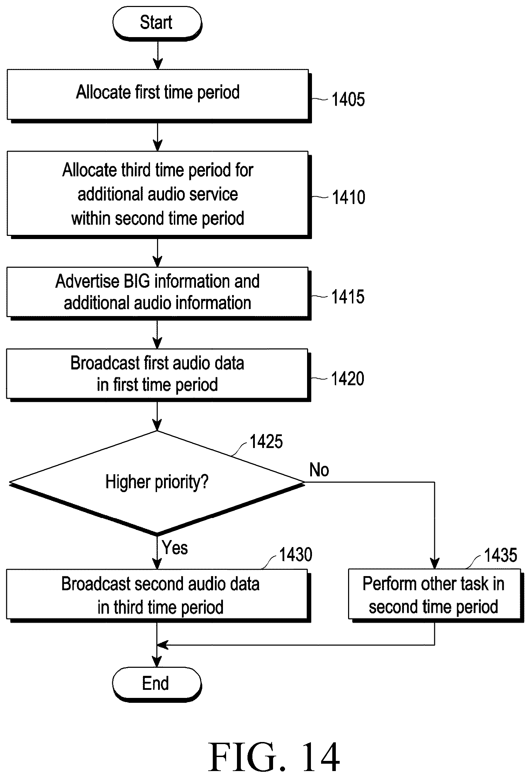

FIG. 14 illustrates a flowchart illustrating a procedure for providing an audio service according to an embodiment of the disclosure. In an embodiment, at least one of operations to be described below may be executed by the processor 1110 of the source electronic device 500. According to embodiments, at least one of operations described below may be omitted, modified, or reordered.

Referring to FIG. 14, in operation 1405, the source electronic device 500 (e.g., the processor 1110) may allocate a first time period for a BIS audio service. The first time period may be defined by one or more parameters (e.g., at least one of Num_BIS, BN, NSE, PTO, or IRC) within BIG information (e.g., BIG information 600). The operation of allocating the first time period may include an operation of setting the parameters.

In operation 1410, the source electronic device 500 (e.g., the processor 1110) may allocate a third time period for an additional audio service within a second time period that is remaining except for the first time period designated for BIS service among designated periodic intervals. In an embodiment, the third time period may be associated with a designated priority. In an embodiment, the source electronic device 500 (e.g., the processor 1110) may identify a second time period that is distinguished from a first time period for a BIS audio service among the intervals, and may set a third time period for an additional audio service associated with BIS in at least a portion of the second time period. In an embodiment, the source electronic device 500 (e.g., the processor 1110) may set a priority associated with the third time period.

In operation 1415, the source electronic device 500 (e.g., the processor 1110) may transmit first information (e.g., BIG information 600 including BIG parameters) related to the first time period, and second information (e.g., additional audio information 2300 or 2402) related to the third time period by including them in advertising data. In an embodiment, BIG information and additional audio information may be included in the same advertising protocol data unit (PDU), or may be included in one or more different advertising PDUs respectively and broadcast.

In operation 1420, the source electronic device 500 (e.g., the processor 1110) may transmit (e.g., broadcast) first audio data of a BIS audio service in the first time period. In operation 1425, the source electronic device 500 (e.g., the processor 1110) may identify that another communication task (e.g., Wi-Fi coexistence operation, or Bluetooth concurrency operation) scheduled for the second time period is present, compare priorities of the scheduled other communication task and the additional audio service with each other, and determine whether a priority of the additional audio service is higher than a priority of the other communication task. When the scheduled other communication task is not present, or when a priority of the additional audio service is higher than a priority of the scheduled other communication task, the source electronic device 500 (e.g., the processor 1110) may proceed to operation 1430. When a priority of the additional audio service is not higher than a priority of the scheduled other communication task, the source electronic device 500 (e.g., the processor 1110) may proceed to operation 1435.

In operation 1430, the source electronic device 500 (e.g., the processor 1110) may transmit (e.g., broadcast) second audio data for the additional audio service in the third time period within the second time period. The second audio data may include at least a portion of the first audio data, or may include subsequent audio data to the first audio data. In an embodiment, the source electronic device 500 (e.g., the processor 1110) may include at least a portion of the first audio data or subsequent audio data in the second audio data according to a pre-agreed rule. The pre-agreed rule may be shared between the source electronic device 500 and sink electronic devices (e.g., the first electronic device 202 and/or the second electronic device 204) that support an additional audio service. In an embodiment, the source electronic device 500 (e.g., the processor 1110) may perform another communication task (e.g., Wi-Fi transmission) in remaining periods except for the third time period of the second time period after transmitting the second audio data during the third time period.

In operation 1435, the source electronic device 500 (e.g., the processor 1110) may perform the other communication task within the second time period. For example, the source electronic device 500 (e.g., the processor 1110) may transmit and/or receive data through Wi-Fi during the second time period, or may perform Bluetooth scan or advertising. In an embodiment, the source electronic device 500 (e.g., the processor 1110) may perform Wi-Fi task during a portion of the second time period, and may transmit at least a portion (e.g., one or more packets) of the second audio data in remaining periods of the second time period.

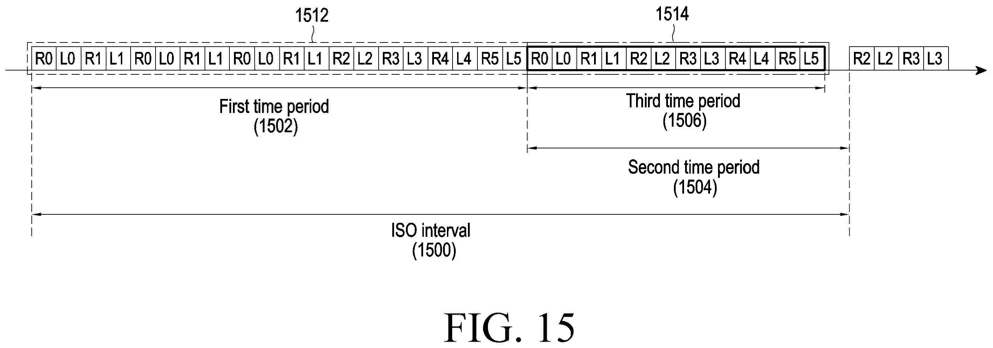

FIG. 15 is a view illustrating transmission of additional audio data according to an embodiment of the disclosure.

Referring to FIG. 15, an ISO interval 1500 may be divided into a first time period 1502 and a second time period 1504. The first time period 1502 is a time period allocated for a BIS audio service within the ISO interval 1500, and the second time period 1504 may be remaining except for the first time period 1502 within the ISO interval 1500. The first time period 1502 may be used to transmit first audio data 1512 (e.g., R0, L0, R1, L1, R2, L2, R3, L3, R4, L4, R5, and L5) for a BIS audio service. A third time period 1506 that may be used for an additional audio service related to a BIS audio service may be allocated within the second time period 1504. The third time period 1506 may be used to transmit second audio data 1514 (e.g., R0, L0, R1, L1, R2, L2, R3, L3, R4, L4, R5, and L5) for an additional audio service related to a BIS audio service.

Although FIG. 15 illustrates an example where the third time period 1506 starts immediately after the first time period 1502, the third time period 1506 may be disposed within the second time period 1504 according to various embodiments. For example, the third time period 1506 may be disposed to end at a start time of a next ISO interval.

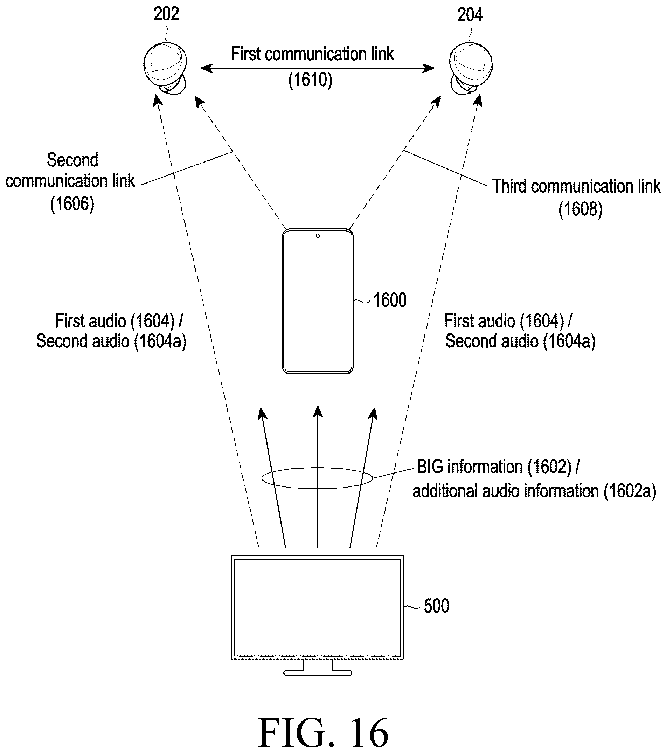

FIG. 16 is a view illustrating an assistant-based audio service according to an embodiment of the disclosure.

Referring to FIG. 16, a first external electronic device (e.g., the first electronic device 202) may establish a first communication link 1610 for bridge communication with a second external electronic device (e.g., the second electronic device 204). The first external electronic device (e.g., the first electronic device 202) may establish a second communication link 1606 (e.g., ACL link) with a third external electronic device 1600 (e.g., the electronic device 101) operating as a BIS assistant role. A second external electronic device (e.g., the second electronic device 204) may establish a third communication link 1608 (e.g., ACL link) with the third external electronic device 1600. Although it is illustrated here that the first external electronic device and the second external electronic device are a pair of devices (e.g., earbuds such as the first electronic device 202 and the second electronic device 204) that are interconnected through bridge communication, the first external electronic device and the second external electronic device may be separate sink electronic devices.

The third external electronic device 1600 may receive periodic advertising data (e.g., AUX_ADV_IND) including synchronization information necessary for reception of BIG information 1602 from the source electronic device 500 through BLE scan, and may transmit the synchronization information to a first external electronic device (e.g., the first electronic device 202) and a second external electronic device (e.g., the second electronic device 204) through the second communication link 1606 and the third communication link 1608. The first external electronic device (e.g., the first electronic device 202) and the second external electronic device (e.g., the second electronic device 204) may receive periodic advertising data (e.g., AUX_SYNC_IND) including BIG information 1602 from the source electronic device 500 based on the synchronization information.

In an embodiment, the first external electronic device (e.g., the first electronic device 202) and the second external electronic device (e.g., the second electronic device 204) may directly receive the synchronization information from the source electronic device 500 through scan instead of receiving the synchronization information from the third external electronic device 1600, and may receive periodic advertising data (e.g., AUX_SYNC_IND) including BIG information 1602 from the source electronic device 500 based on the synchronization information.

The source electronic device 500 may broadcast first audio data 1604 of a BIS audio service based on BIG information 1602. The first external electronic device (e.g., the first electronic device 202) and the second external electronic device (e.g., the second electronic device 204) may receive the first audio data 1604 from the source electronic device 500 during a first time period defined by BIG information 1602.

In an embodiment, the first external electronic device (e.g., the first electronic device 202) may receive additional audio information 1602a (e.g., additional audio information 2300 or 2402) for an additional audio service from the source electronic device 500 along with the BIG information 1602. In an embodiment, the additional audio information 1602a may be included in AUX_SYNC_IND along with BIG information 1602, or may be included in advertising data (e.g., another AUX_SYNC_IND) different from BIG information 1602. In an embodiment, the additional audio information 1602a may be included in a header of at least one audio data packet transmitted in a first time period defined by BIG information 1602. The first external electronic device (e.g., the first electronic device 202) may receive second audio data 1604a related to a BIS audio service during a third time period identified based on the additional audio information 1602a.

In an embodiment, the first external electronic device (e.g., the first electronic device 202) and/or the second external electronic device (e.g., the second electronic device 204) may receive the additional audio information 1602a through the third external electronic device 1600 instead of directly receiving it from the source electronic device 500. The third external electronic device 1600 may receive the additional audio information 1602a from the source electronic device 500 and deliver the additional audio information 1602a to a first external electronic device (the first electronic device 202) and/or a second external electronic device (the second electronic device 204) through the second communication link 1606 and the third communication link 1608. In an embodiment, the third external electronic device 1600 may deliver the additional audio information 1602a only to a specific device (e.g., the first electronic device 202) to which an additional audio service is to be provided, and may not deliver the additional audio information 1602a to other devices (e.g., the second electronic device 204 or another external electronic device (not illustrated)). Only the first electronic device 202 may use an additional audio service based on the additional audio information 1602a.

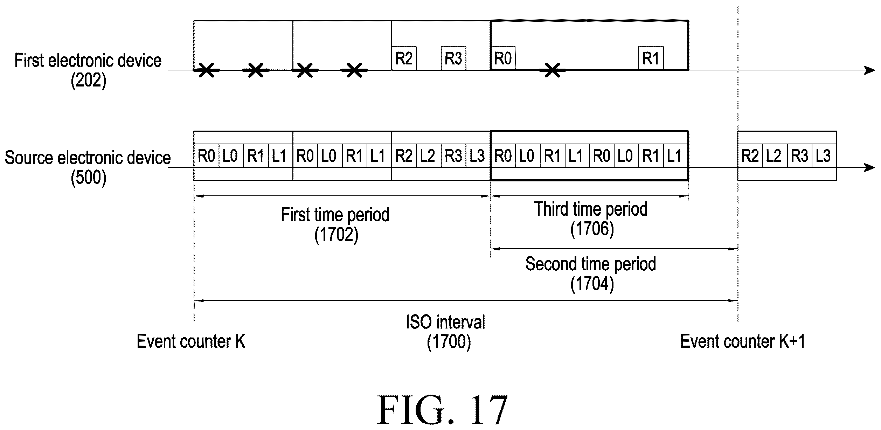

FIG. 17 is a view illustrating reception of additional audio data according to an embodiment of the disclosure.

Referring to FIG. 17, an ISO interval 1700 corresponding to event counter K may include a first time period 1702 and a second time period 1704 non-overlappingly. The source electronic device 500 may transmit first audio data in the first time period 1702, and may transmit second audio data in a third time period 1706 within the second time period 1704. In an embodiment, the second audio data may include a portion (e.g., R0, L0, R1, L1, R0, L0, R1, and L1 packets) of first audio data (e.g., R0, L0, R1, L1, R0, L0, R1, L1, R2, L2, R3, and L3 packets).

The first electronic device 202 corresponding to a right channel may fail to receive a portion (e.g., R0 and R1 packets) of the first audio data in first four sub events in the first time period 1702, and may successfully receive remaining portions (e.g., R2 and R3 packets) of the first audio data in last two sub events. The first electronic device 202 may know in advance opportunities for retransmission of a portion (e.g., R0 and R1 packets) of the first audio data within the third time period 1706 based on additional audio information received from the source electronic device 500, and thus may receive the missed audio data (e.g., R0 and R1 packets) again in the third time period 1706. For example, R0 and R1 packets may be repeatedly transmitted twice each within the third time period 1706, and the first electronic device 202 may not monitor a reception opportunity of a next R0 packet if it succeeds in receiving a first R0 packet in the third time period 1706. For example, the first electronic device 202 may receive an R1 packet at a reception opportunity of a next R1 packet if it fails to receive a first R1 packet in the third time period 1706.

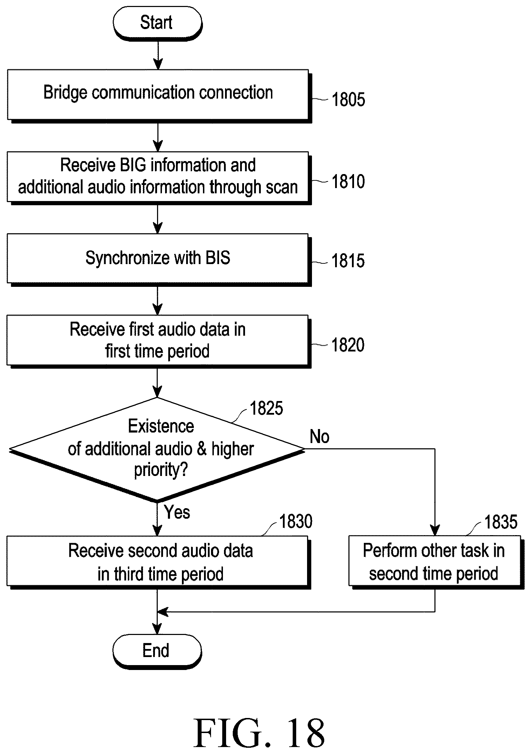

FIG. 18 illustrates a flowchart illustrating a procedure for receiving an audio service according to an embodiment of the disclosure. In an embodiment, at least one of operations to be described below may be executed by the processor 310 of the first electronic device 202. According to embodiments, at least one of operations described below may be omitted, modified, or reordered.

Referring to FIG. 18, in operation 1805, the first electronic device 202 (e.g., the processor 310) may generate a first communication link 1610 for bridge communication with the second electronic device 204. In operation 1810, the first electronic device 202 (e.g., the processor 310) may discover the source electronic device 500 through scan, and may receive first information (e.g., BIG information 600 or 1602 including BIG parameters) related to a BIS audio service and second information (e.g., additional audio information 2300 or 2402) related to additional transmission of the BIS audio service from the source electronic device 500.

In operation 1815, the first electronic device 202 (e.g., the processor 310) may synchronize with at least one BIS (e.g., BIG) of the source electronic device 500 based on BIG information 1602.

In operation 1820, the first electronic device 202 (e.g., the processor 310) may receive first audio data for a BIS audio service in a first time period identified by BIG information 1602. In an embodiment, the first electronic device 202 (e.g., the processor 310) may obtain additional audio information 1602a from a header of at least one audio data packet received in the first time period, instead of receiving the additional audio information 1602a through periodic advertising data along with BIG information 1602 in operation 1815.

In operation 1825, the first electronic device 202 (e.g., the processor 310) may identify that an additional audio service using a second time period is present based on additional audio information 1602a and, when another communication task (e.g., Wi-Fi coexistence operation or Bluetooth concurrency operation) scheduled for the second time period is present, may determine whether the additional audio service has a higher priority than the other communication task. In an embodiment, the first electronic device 202 (e.g., the processor 310) may determine that an additional audio service is present in a current interval when the additional audio information 1602a is received in operation 1810. In an embodiment, the first electronic device 202 (e.g., the processor 310) may determine that an additional audio service is present in a current interval based on receiving the additional audio information 1602a in operation 1810 and identifying that information indicating that an additional audio service is present is included in the additional audio information 1602a.

When an additional audio service is present and the additional audio service has a higher priority than another communication task (or when no scheduled other communication task is present), the first electronic device 202 (e.g., the processor 310) may proceed to operation 1830. When an additional audio service is not present (e.g., additional audio information is not received) or when another communication task having a higher priority than the additional audio service is scheduled, the first electronic device 202 (e.g., the processor 310) may proceed to operation 1835.

In operation 1830, the first electronic device 202 (e.g., the processor 310) may receive second audio data during a third time period identified by the additional audio information within the second time period. In an embodiment, the first electronic device 202 (e.g., the processor 310) may selectively receive at least a portion of the second audio data based on a reception result of the first audio data. In an embodiment, the first electronic device 202 (e.g., the processor 310) may know in advance that the second audio data includes at least a portion of the first audio data or subsequent audio data according to a pre-agreed rule. The pre-agreed rule may be shared between the source electronic device 500 and sink electronic devices (e.g., the first electronic device 202 and/or the second electronic device 204) that support an additional audio service.

In an embodiment, the first electronic device 202 (e.g., the processor 310) may determine whether the second audio data is present in the third time period. In an embodiment, the first electronic device 202 (e.g., the processor 310) may determine that second audio is not present and may not monitor subsequent reception of a current third time period when it fails to receive first few (e.g., a designated number) packets of the second audio data.

In operation 1835, the first electronic device 202 (e.g., the processor 310) may perform the other communication task within the second time period. For example, the second electronic device 202 (e.g., the processor 310) may transmit and/or receive data through Wi-Fi during the second time period, or may perform Bluetooth scan or advertising.

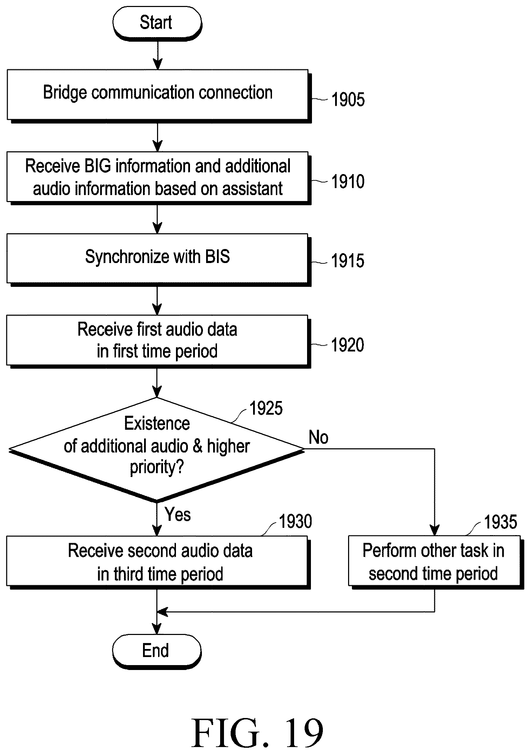

FIG. 19 illustrates a flowchart illustrating a procedure for receiving an assistant-based audio service according to an embodiment of the disclosure. In an embodiment, at least one of operations to be described below may be executed by the processor 310 of the first electronic device 202. According to embodiments, at least one of operations described below may be omitted, modified, or reordered.

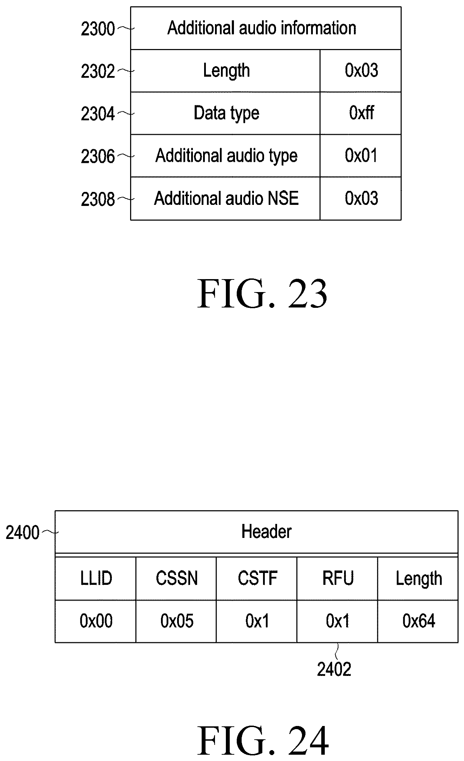

Referring to FIG. 19, in operation 1905, the first electronic device 202 (e.g., the processor 310) may generate a first communication link 1610 for communication (e.g., bridge communication) with the second electronic device 204. In operation 1910, the first electronic device 202 (e.g., the processor 310) may establish a second communication link 1606 with a third external electronic device 1600 of assistant role, and may receive first information (e.g., BIG information 600 or 1602 including BIG parameters) related to a BIS audio service and second information (e.g., additional audio information 2300 of FIG. 23 or 2402 of FIG. 24) related to additional transmission of the BIS audio service from the source electronic device 500 based on synchronization information provided from the third external electronic device 1600 of assistant role. In an embodiment, the first electronic device 202 (e.g., the processor 310) may receive synchronization information related to the source electronic device 500 from the third external electronic device 1600 through the second communication link 1606, and may receive BIG information 1602 and additional audio information 1602a from the source electronic device 500 based on the synchronization information.

In operation 1915, the first electronic device 202 (e.g., the processor 310) may synchronize with at least one BIS (e.g., BIG) of the source electronic device 500 based on BIG information 1602. In operation 1920, the first electronic device 202 (e.g., the processor 310) may receive first audio data for a BIS audio service in a first time period identified by BIG information 1602. In an embodiment, the first electronic device 202 (e.g., the processor 310) may obtain additional audio information 1602a from a header of at least one audio data packet received in the first time period, instead of receiving the additional audio information 1602a through periodic advertising data along with BIG information 1602 in operation 1915.

In operation 1925, the first electronic device 202 (e.g., the processor 310) may identify that an additional audio service using a second time period is present based on additional audio information 1602a and, when another communication task (e.g., Wi-Fi coexistence operation or Bluetooth concurrency operation) scheduled in the second time period is present, may determine whether the additional audio service has a higher priority than the other communication task. When an additional audio service is present and the additional audio service has a higher priority than another communication task (or when no scheduled other communication task is present), the first electronic device 202 (e.g., the processor 310) may proceed to operation 1930. When an additional audio service is not present (e.g., additional audio information is not received) or when another communication task having a higher priority than the additional audio service is scheduled, the first electronic device 202 (e.g., the processor 310) may proceed to operation 1935.

In operation 1930, the first electronic device 202 (e.g., the processor 310) may receive second audio data during a third time period identified by the additional audio information within the second time period. In an embodiment, the first electronic device 202 (e.g., the processor 310) may selectively receive at least a portion of the second audio data based on a reception result of the first audio data. In an embodiment, the first electronic device 202 (e.g., the processor 310) may know in advance that the second audio data includes at least a portion of the first audio data or subsequent audio data according to a pre-agreed rule. The pre-agreed rule may be shared between the source electronic device 500 and sink electronic devices (e.g., the first electronic device 202 and/or the second electronic device 204) that support an additional audio service.

In operation 1935, the first electronic device 202 (e.g., the processor 310) may perform the other communication task within the second time period. For example, the second electronic device 202 (e.g., the processor 310) may transmit and/or receive data through Wi-Fi during the second time period, or may perform Bluetooth scan or advertising.

Embodiments of the disclosure may maximize transmission opportunities of BIS audio data while ensuring BIS and other operations according to internal scheduling state and surrounding wireless environment of the source electronic device 500 when the source electronic device 500 provides an audio service using BIS. The source electronic device 500 may allocate a third time period related to an additional audio service within a second time period except for a first time period through which first audio data of a BIS audio service is transmitted, and may transmit additional audio information related to the additional audio service so that only a designated external electronic device (e.g., the first electronic device 202) among surrounding sink electronic devices may know. The source electronic device 500 may compare priorities of communication tasks scheduled within a second time period, and may broadcast second audio data of the additional audio service in a third time period within the second time period when a priority of an additional audio service is highest. The source electronic device 500 may enhance quality of an audio service and increase efficiency of link resources by supplementing first audio data through second audio data.

In an embodiment of the disclosure, the source electronic device 500 may set first time periods (e.g., first time periods 1502, 1702) in a frequency band where BIS operates. In an embodiment, a first time period may be determined as a minimum period required for BIS in a designated periodic interval (e.g., ISO interval 1500 or 1700). The source electronic device 500 may generate BIG parameters (e.g., BIG information 600) for basic performance of a BIS audio service. The BIG parameters may be set based on, e.g., number of BISs of audio data to be transmitted, CODEC, sampling frequency, and/or frame duration.

Table 1 below shows examples of recommended sets of BIG parameters for a BIS audio service.

**[Table 1]**

| set | ISO_Interval | BN | NSE | IRC | PTO | NUM_BIS | RTN |
|---|---|---|---|---|---|---|---|
| 1 | 30ms | 3 | 9 | 2 | 1 | 1 or 2 | 2 |
| 2 | 10ms | 1 | 5 | 1 | 1 | 1 or 2 | 4 |
| 3 | 20ms | 2 | 8 | 2 | 1 | 1 or 2 | 3 |

Here, RTN may mean retransmission number. For example, the source electronic device 500 may set any one of sets 1, 2, or 3 of Table 1, or may set BIG parameters of desired values to provide an audio service to surrounding sink electronic devices including the first electronic device 202 and/or the second electronic device 204. The source electronic device 500 may determine a first time period 1502 or 1702 for first audio data of a BIS audio service based on the BIG parameters.

The source electronic device 500 may set a second time period 1504 or 1704 that is distinguished from a first time period 1502 or 1702 except for the first time period 1502 or 1702 where BIS operates. A second time period 1504 or 1704 may be set as a period when BIS does not operate so that Bluetooth concurrency operations (e.g., inquiry, inquiry scan, page, page scan, BLE scan, BLE advertising, or Bluetooth/BLE connection maintenance) or Wi-Fi coexistence operations may be performed.

The source electronic device 500 may calculate a first time period 1502 or 1702 to be used for BIS transmission among ISO intervals 1500 or 1700 of BIS based on at least one of BIS_Num, ISO_Interval, NSE, PTO, IRC, Sub Interval, or BIS_Spacing among BIG parameters. For example, for a BIS audio service set with BIS_NUM=2, ISO_Interval=20ms, NSE=10, BN=2, IRC=3, PTO=1, Max_PDU=100byte, BIS_Spacing=594µs (micro second), a first time period 1502 or 1702 may be set to about 60% of ISO_Interval, and remaining periods may be set as a second time period 1504 or 1704 that may be used for other communication tasks.

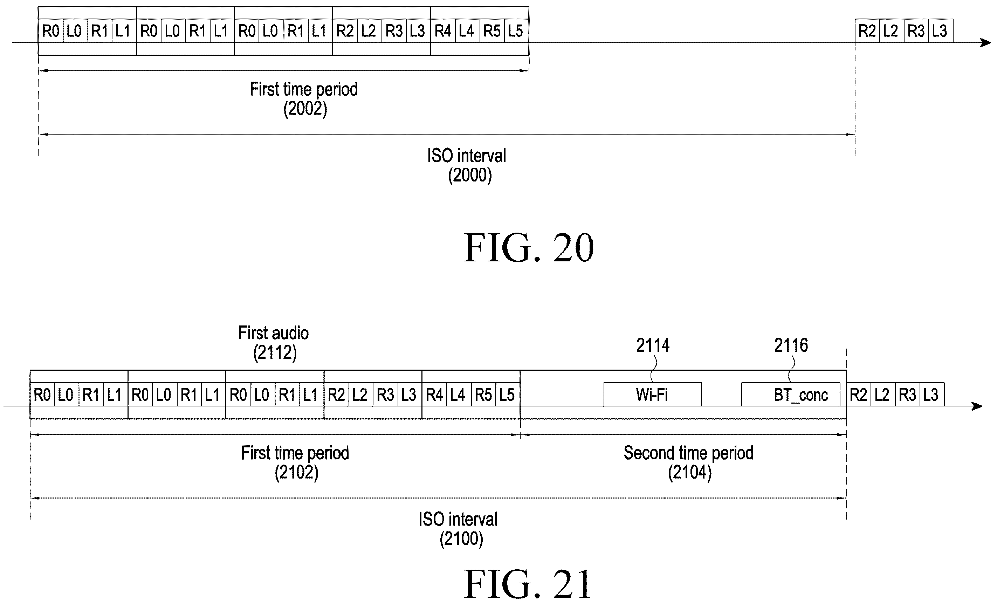

FIGS. 20, 21, and 22 are views illustrating allocation of time periods according to embodiments of the disclosure.

Referring to FIG. 20, a length of an ISO interval 2000 may be indicated by ISO_Interval, and a first time period 2002 including NSE=10 sub events may be set within the ISO interval 2000. Each sub event may be configured as illustrated in, e.g., FIGS. 7 and 8, and may be used to carry a pair of audio data packets (e.g., any one of {R0, L0}, {R1, L1}, {R2, L2}, {R3, L3}, {R4, L4}, or {R5, L5}).

Referring to FIG. 21, a length of an ISO interval 2100 may be indicated by ISO_Interval, a first time period 2102 including NSE=10 sub events is set within the ISO interval 2100, and a second time period 2104 that is remaining except for the first time period 2102 may be determined. The first time period 2102 may be used to transmit first audio data 2112 (e.g., audio data packets {R0, L0}, {R1, L1}, {R2, L2}, {R3, L3}, {R4, L4}, and {R5, L5}). The second time period 2104 may be used to perform Wi-Fi operation 2114 and/or Bluetooth concurrency (BT_conc) operation 2116 according to scheduling.

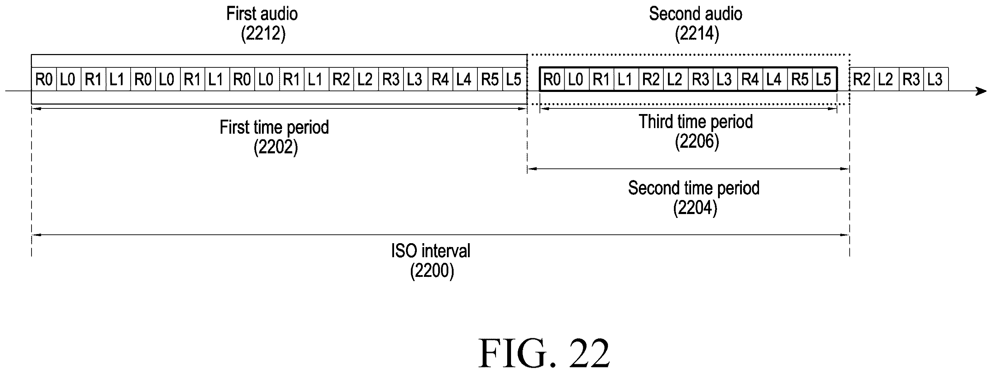

FIG. 22 is a view illustrating a third time period for an additional audio service according to an embodiment of the disclosure.

Referring to FIG. 22, an ISO interval 2200 for a BIS audio service may be divided into a first time period 2202 and a second time period 2204. The source electronic device 500 may allocate a third time period 2206 for an additional audio service associated with BIS within the second time period 2204. In an embodiment, the third time period 2206 may be allocated based on transmission amount of audio data related to a BIS audio service and/or number of transmissions of audio data packets. For example, the source electronic device 500 may allocate maximum resources that may be sent in the second time period 2204 as the third time period 2206. The source electronic device 500 may transmit second audio data 2214 in the third time period 2206 when there is no scheduled other communication task having a higher priority. The second audio data 2214 may include at least a portion of first audio data 2212 to reinforce reception success rate of the first audio data 2212 transmitted in the first time period 2202.

For example, for a BIS audio service having BIS_NUM=2, ISO_Interval=20ms, NSE=10, BN=2, IRC=3, PTO=1, Max_PDU=100byte, BIS_Spacing=594µs, when the first time period 2202 may be allocated to about 60% of the ISO interval 2200 and the rest of the ISO interval 2200 is allocated as the second time period 2204, the third time period 2206 may be allocated to maximally use BIS transmission opportunities in the second time period 2204.

The source electronic device 500 may set a priority of the third time period 2206. Table 2 below shows an example of a priority table defining priorities of communication tasks that may be performed in the source electronic device 500.

**[Table 2]**

| task | priority |
|---|---|
| page scan | 9 |
| page | 13 |
| inquiry scan | 9 |
| inquiry | 5 |
| BLE scan (duty full) | 3 |
| BLE scan (duty 50% over) | 5 |
| BLE scan (duty 50% under) | 9 |
| BLE advertising | 7 |
| BLE advertising extension | 5 |
| BIS audio service | 15 |
| additional audio service | 7 |

A priority of each task may be a value in decimal or hex form so that it may be compared with priorities of other tasks. A higher priority value may be allocated to a task that is more important from a user's perspective. The source electronic device 500 may change a priority table when necessary during a BIS audio service. For example, audio service of BIS and additional audio service may have different priorities (e.g., 15 and 7). The source electronic device 500 may assign a high priority (e.g., 15) to a BIS audio service for audio quality of other sink electronic devices except for a designated sink electronic device (e.g., the first electronic device 202), and may assign a lower priority (e.g., 7) to an additional audio service operating in a third time period than other communication tasks (e.g., page scan, page, inquiry scan, or BLE scan (duty 50% under) or Wi-Fi coexistence operation). FIG. 23 illustrates an example of additional audio information transmitted through periodic advertising according to an embodiment of the disclosure.

Referring to FIG. 23, additional audio information 2300 may include at least one of a length field 2302, a data type field 2304, an additional audio type field 2306, or additional audio NSE 2308.

The source electronic device 500 may broadcast BIG information 600 related to a first time period that may be read by all surrounding sink electronic devices (e.g., the first electronic device 202 and the second electronic device 202), and additional audio information 2300 related to a third time period that may be read by only at least some sink electronic devices (e.g., the first electronic device 202).

In an embodiment, the source electronic device 500 may transmit additional audio information 2300 through advertising. For example, a periodic advertising PDU (e.g., AUX_SYNC_IND) broadcast by the source electronic device 500 may include additional audio information 2300. The periodic advertising PDU may be used to periodically transmit BIG information 600 for a BIS audio service, and the first electronic device 200 may synchronize a first time period based on the periodic advertising PDU and then receive first audio data from the source electronic device 500.

The source electronic device 500 may include additional audio information 2300 in an ACAD field of the periodic advertising PDU. A data type field 2304 of the additional audio information 2300 may be set to a value (e.g., 0xff) identifying a vendor, an additional audio type 2306 may indicate a type (e.g., retransmission or subsequent data) of additional audio data transmitted through a third time period, and additional audio NSE 2308 may indicate length of a third time period and transmission opportunities within the third time period. The first electronic device 202 may interpret values set in an ACAD field to know existence of a third time period.

FIG. 24 illustrates an example of additional audio information transmitted through an audio data packet according to an embodiment of the disclosure.

Referring to FIG. 24, the source electronic device 500 may transmit additional audio information 2402 related to a third time period (e.g., the third time period 2206) using a header 2400 of first audio data transmitted in a first time period (e.g., the first time period 2202) allocated for a BIS audio service. For example, a reserved for future use (RFU) field in a header 2400 of at least one audio data packet included in first audio data may include 1-bit additional audio information 2402 indicating whether a third time period (e.g., the third time period 2206) is used.

In an embodiment, when the source electronic device 500 provides an additional audio service through a third time period, the additional audio information 2402 may be set to '1'. The first electronic device 202 may know that additional audio data (e.g., the second audio data 2214) according to pre-agreed information (e.g., NSE and packet order) is transmitted in a pre-agreed third time period (e.g., the third time period 2206) within an ISO interval (e.g., the ISO interval 2200) that received the header 2400, based on the additional audio information 2402 set to '1'.

In an embodiment, the source electronic device 500 may include 1-bit additional audio information 2402 indicating that additional audio data is transmitted within a pre-agreed third time period in periodic advertising data (e.g., AUX_SYNC_IND).

In an embodiment, the source electronic device 500 may include additional audio information 2300 including at least one of an additional audio type field 2306 and/or additional audio NSE 2308 in a header 2400 of an audio data packet.

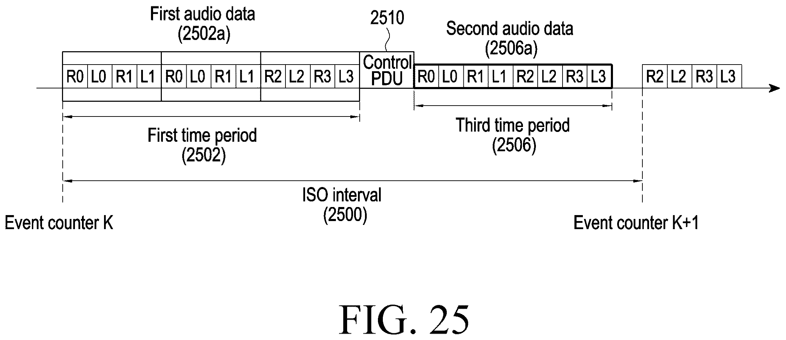

FIG. 25 is a view illustrating a procedure for notifying an additional audio service using a control packet according to an embodiment.

Referring to FIG. 25, the source electronic device 500 may transmit a control packet (e.g., the BIS control PDU 2510) after transmitting first audio data 2502a in a first time period 2502 allocated for a BIS audio service, and may include 1-bit additional audio information 2402 in an RFU section of a header (e.g., the header 2400) of the BIS control PDU 2510. The first electronic device 202 may know that additional audio data (e.g., the second audio data 2506a) is transmitted in a pre-agreed third time period 2506 within an ISO interval 2500 that received the BIS control PDU 2510, based on existence of additional audio information 2402 set to '1' in an RFU section of header 2400 of the BIS control PDU 2510 received after the first time period 2502.

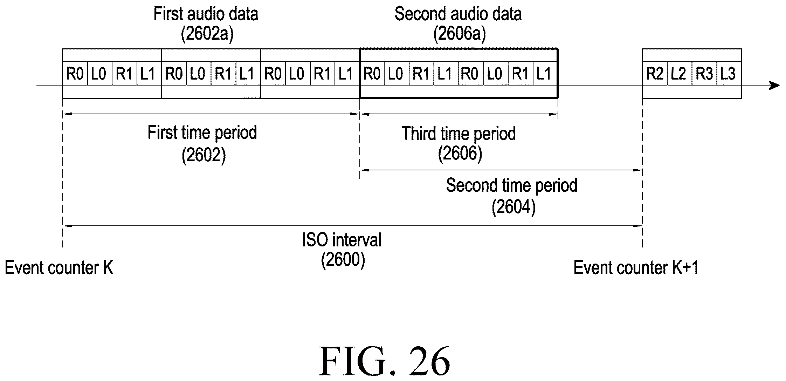

FIG. 26 is a view illustrating transmission of additional audio data according to an embodiment of the disclosure.

Referring to FIG. 26, the source electronic device 500 may perform BIS operation (e.g., transmission of the first audio data 2602a) in a first time period 2602 within an ISO interval 2600, and may compare a priority of another communication task to be executed in a second time period 2604 with a priority of an additional audio service. When no other communication task is reserved (e.g., scheduled) in the second time period 2604, the source electronic device 500 may transmit second audio data 2606a for an additional audio service in a third time period 2606.

In an embodiment, when priority of an additional audio service is lower than that of other communication tasks in second time periods (not illustrated) of multiple ISO intervals so that the additional audio service may not be provided continuously, the source electronic device 500 may change priority of the additional audio service to a value higher than, e.g., '7'. When second audio data 2606a is transmitted through priority comparison in a second time period 2604 of an ISO interval 2600, the source electronic device 500 may restore priority of an additional audio service to a default value (e.g., '7'). For example, when an additional audio service may not be performed even in a second time period 2604 of an ISO interval 2600 due to scheduling of another communication task of higher priority, the source electronic device 500 may further increase priority of the additional audio service.

In an embodiment, when another communication task is requested while providing an additional audio service using a third time period 2606 within a second time period 2604, the source electronic device 500 may increase priority of the other communication task so that the other communication task may be performed through priority comparison in a second time period of a next ISO interval (not illustrated). In an embodiment, when another communication task is requested while performing an additional audio service, the source electronic device 500 may abandon transmission of second audio data 2606a for the additional audio service and perform the other communication task.

The source electronic device 500 may perform an additional audio service in a third time period 2606 when a priority of the additional audio service is higher than a priority of a scheduled other communication task. For example, when a priority of an additional audio service is higher than a priority of a scheduled other communication task, or when no scheduled other communication task is present, the source electronic device 500 may transmit second audio data 2606a for the additional audio service in a third time period 2606.

In an embodiment, to enhance reception rate of a BIS audio service, the source electronic device 500 may include at least a portion of the first audio data 2602a in second audio data 2606a transmitted in a third time period 2606 according to a pre-agreed rule with sink electronic devices (e.g., the first electronic device 202) that support an additional audio service. For example, at least one audio data packet (e.g., R0, L0, R1, and L1) among first audio data 2602a transmitted in a first time period 2602 of a current event counter (e.g., event counter K) may be included in second audio data 2606a.

Audio data packets transmitted in a first time period 2602 may be determined by NSE, BN, PTO, and IRC among BIG information of a BIS audio service. For example, if BN=2, at least two audio data packets (e.g., {R0, L0} and {R1, L1}) may be transmitted in a first time period 2602 of an ISO interval 2600 of event counter K. The source electronic device 500 may include the same audio data packets (e.g., {R0, L0} and {R1, L1}) transmitted in a first time period 2602 of event counter K in second audio data 2606a of a third time period 2606.

A sink electronic device (e.g., the first electronic device 202) that supports an additional audio service through a third time period 2606 and identifies that an additional audio service is provided according to additional audio information may identify audio data packets included in second audio data 2602a according to a pre-agreed rule.

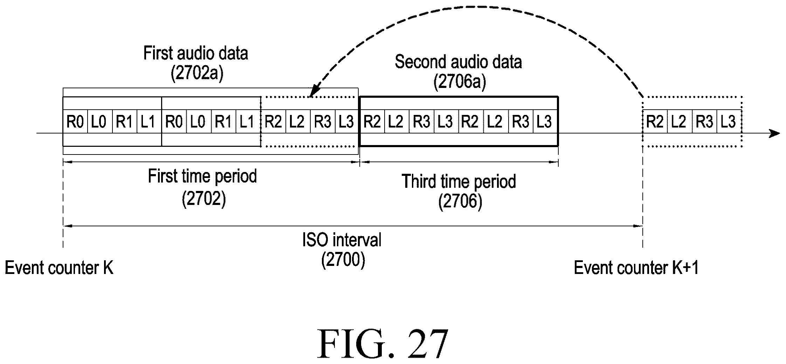

FIG. 27 is a view illustrating transmission of additional audio data using PTO according to an embodiment of the disclosure.

Referring to FIG. 27, the source electronic device 500 may transmit first audio data 2702a including audio data packets (e.g., R0, L0, R1, L1, R0, L0, R1, and L1) corresponding to a current event counter (e.g., event counter K) and audio data packets (e.g., R2, L2, R3, and L3) corresponding to a next event counter (e.g., event counter K+1) in a first time period 2702 for a BIS audio service of an ISO interval 2700. The audio data packets (e.g., R2, L2, R3, and L3) corresponding to the next event counter may be referred to as PTO audio data packets determined by a PTO parameter among BIG information.

The source electronic device 500 may transmit second audio data 2706a including PTO audio data packets (e.g., {R2, L2} and {R3, L3}) of a current event counter (e.g., event counter K) in a third time period 2706 for an additional audio service among an ISO interval 2700. For example, when PTO=1, PTO audio data packets (e.g., {R2, L2}, {R3, L3}) for event counter K+1 may be transmitted in advance after audio data packets (e.g., {R0, L0}, {R1, L1}) of event counter K within a first time period 2702 of event counter K. The source electronic device 500 may include PTO audio data packets (e.g., {R2, L2} and {R3, L3}) of event counter K in second audio data 2706a transmitted in a third time period 2706 for an additional audio service.

A sink electronic device (e.g., the first electronic device 202) that supports an additional audio service through a third time period 2706 and identifies that an additional audio service is provided according to additional audio information may identify audio data packets included in second audio data 2706a according to a pre-agreed rule.

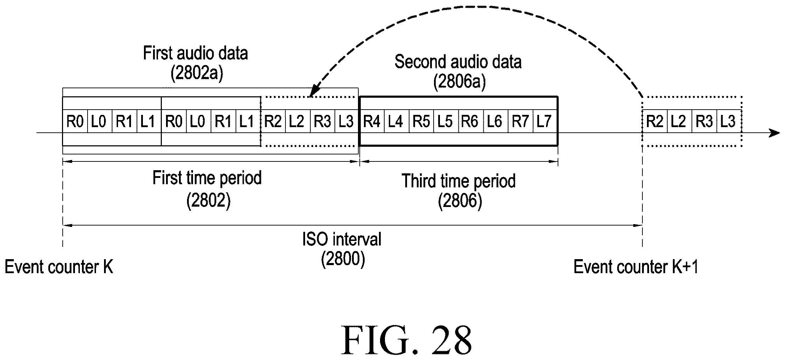

FIG. 28 is a view illustrating transmission of additional audio data using subsequent data according to an embodiment of the disclosure.

Referring to FIG. 28, the source electronic device 500 may transmit first audio data 2802a including audio data packets (e.g., R0, L0, R1, L1, R0, L0, R1, and L1) corresponding to a current event counter (e.g., event counter K) and audio data packets (e.g., R2, L2, R3, and L3) corresponding to a next event counter (e.g., event counter K+1) in a first time period 2802 for a BIS audio service of an ISO interval 2800. The audio data packets (e.g., R2, L2, R3, and L3) corresponding to the next event counter may be referred to as PTO audio data packets determined by a PTO parameter among BIG information.

The source electronic device 500 may transmit second audio data 2806a including subsequent audio data packets of first audio data 2802a in a third time period 2806 for an additional audio service after a first time period 2802 within an ISO interval 2800. For example, when first audio data 2802a including {R0, L0}, {R1, L1}, {R2, L2}, and {R3, L3} is transmitted in a first time period 2802 of event counter K, the source electronic device 500 may include subsequent audio data packets of first audio data 2802a, i.e., {R4, L4}, {R5, L5}, {R6, L6}, and {R7, L7} in second audio data 2806a transmitted in a third time period 2806 for an additional audio service.

A sink electronic device (e.g., the first electronic device 202) that supports an additional audio service through a third time period 2806 and identifies that an additional audio service is provided according to additional audio information may identify audio data packets included in second audio data 2806a according to a pre-agreed rule.

In an embodiment of the disclosure, a first external electronic device (e.g., the first electronic device 202) may establish a first communication link (e.g., the first communication link 1610) for exchanging data packets with a second external electronic device (e.g., the second electronic device 204) and transmitting an acknowledgement (ACK) for a received data packet. The first communication link 1610 may be based on Bluetooth legacy or BLE. A first communication link 1610 based on Bluetooth legacy may be established through paging and page scan. A first communication link 1610 based on BLE may be established through advertising and BLE scan.

In an embodiment, a first external electronic device (e.g., the first electronic device 202) may recognize a second external electronic device (e.g., the second electronic device 204) using wireless communication (e.g., BLE). A second external electronic device (e.g., the second electronic device 204) may transmit advertising data in multicast or broadcast manner. The advertising data may provide information related to connection or account (e.g., pairing) to unspecified surrounding electronic devices (e.g., the source electronic device 500) using wireless communication (e.g., BLE). In an embodiment, a first external electronic device (e.g., the first electronic device 202) and a second external electronic device (e.g., the second electronic device 204) may be stored in a designated case (e.g., an external electronic device 250), and may be configured to transmit the advertising data when the case is opened while being stored in the case. In an embodiment, a case (e.g., the external electronic device 250) may transmit advertising data related to a first external electronic device (e.g., the first electronic device 202) and a second external electronic device (e.g., the second electronic device 204).

In an embodiment, advertising data may include at least one of identification information of an electronic device (e.g., the first electronic device 202 or the second electronic device 204) (hereinafter, device identification information), account information of a user (hereinafter, user account information), information about whether currently paired with another device (hereinafter, current pairing information), a list of previously paired devices (hereinafter, pairing list), information about devices that may be paired simultaneously (hereinafter, simultaneous pairing information), transmission power, sensing area, or information about remaining battery capacity (hereinafter, battery status information).

A first external electronic device (e.g., the first electronic device 202) and a second external electronic device (e.g., the second electronic device 204) may start transmitting the advertising data according to a designated condition. The designated condition may include, e.g., at least one of when power is supplied, a designated time period, or a user input.

In an embodiment, a first external electronic device (e.g., the first electronic device 202) may connect a first communication link 1610 with a second external electronic device (e.g., the second electronic device 204) in Bluetooth legacy manner. The first external electronic device (e.g., the first electronic device 202) and a second external electronic device (e.g., the second electronic device 204) may be connected to each other by performing page and page scan respectively at a time when a case (e.g., the external electronic device 250) for charging and storage is opened or separated from the case. The first external electronic device (e.g., the first electronic device 202) may be a primary electronic device that serves as a central role of the first communication link 1610. A second external electronic device (e.g., the second electronic device 204) may serve as a peripheral role of the first communication link 1610. The first external electronic device (e.g., the first electronic device 202) and the second external electronic device (e.g., the second electronic device 204) may exchange at least one information among status information of each other, media packet retransmission, operation information, version, battery status, wearing status, or connection status through the first communication link 1610.

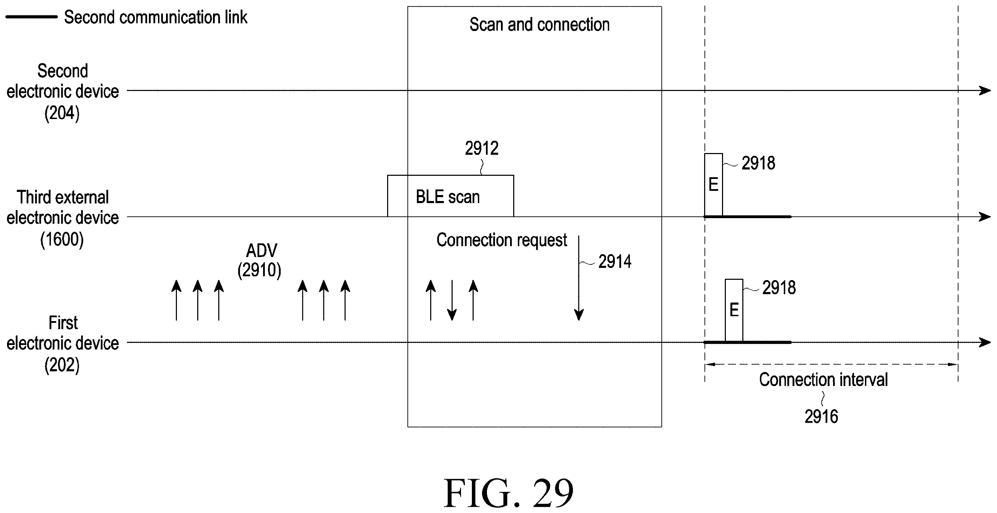

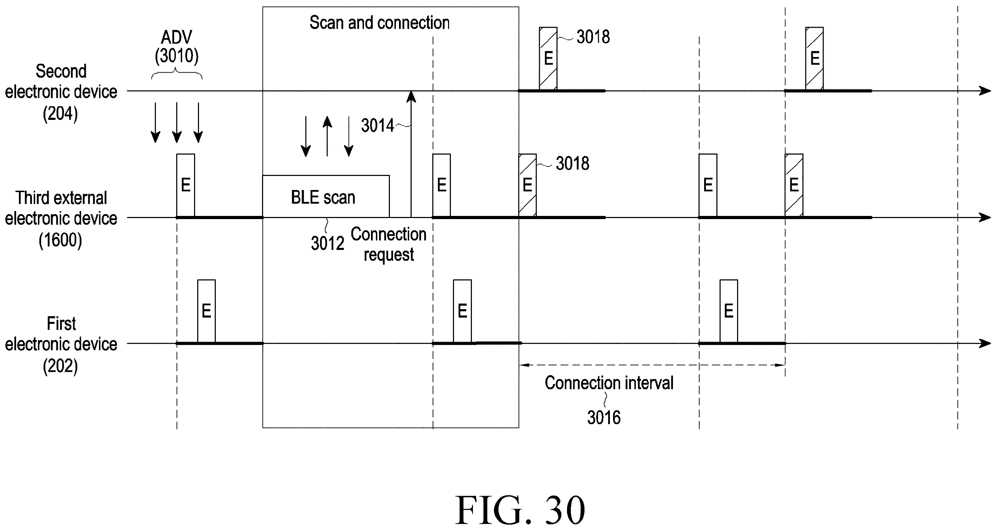

FIGS. 29 and 30 are views illustrating establishment of an assistant connection according to an embodiment.

Referring to FIG. 29, a first external electronic device (e.g., the first electronic device 202) and a second external electronic device (e.g., the second electronic device 204) may respectively generate a second communication link 1606 and a third communication link 1608 with a third external electronic device 1600 (e.g., the electronic device 101). The first electronic device 202 may transmit advertising (ADV) data 2910 for connection to the third external electronic device 1600 at a predefined time such as when a case is opened or power is turned on, or by a predefined operation. The advertising data 2910 may be transmitted faster, slower, or simultaneously than advertising/BLE scan or page/page scan for generation of the first communication link 1610.

The third external electronic device 1600 may perform BLE scan 2912 for connection to the first electronic device 202 and the second electronic device 204. The third external electronic device 1600 may receive advertising data 2910 transmitted by the first electronic device 202 through BLE scan 2912, then transmit a connection request 2914 to the first electronic device 202, and complete generation of the second communication link 1606 by exchanging first data PDUs (e.g., E(empty) PDUs) 2918 at a start time of a first connection interval 2916.

Referring to FIG. 30, the second electronic device 204 may transmit advertising (ADV) data 3010 for connection to the third external electronic device 1600 at a predefined time such as when a case is opened or power is turned on, or by a predefined operation. The advertising data 3010 may be transmitted faster, slower, or simultaneously than advertising/BLE scan or page/page scan for generation of the first communication link 1610.

The third external electronic device 1600 may perform BLE scan 3012 for connection to the first electronic device 202 and the second electronic device 204. The third external electronic device 1600 may receive advertising data 3010 transmitted by the second electronic device 204 through BLE scan 3012, then transmit a connection request 3014 to the second electronic device 204, and complete generation of the third communication link 1608 by exchanging first data PDUs (e.g., E(empty) PDUs) 3018 at a start time of a first connection interval 3016.

In an embodiment, the third external electronic device 1600 may generate a first CIS communication link (not illustrated) with the first electronic device 202 and/or a second CIS communication link (not illustrated) with the second electronic device 204 by a designated method such as a request of the first electronic device 202, a request of the second electronic device 204, a user input, a designated application operation, or entry into a designated menu. The third external electronic device 1600 may generate a first CIS communication link and a second CIS communication link within one CIG, or may generate a first CIS communication link and a second CIS communication link within two CIGs respectively. The third external electronic device 1600 may generate a CIS communication link with only one electronic device (e.g., the first electronic device 202). When a first CIS communication link and a second CIS communication link are generated within one or two CIGs, CIS parameter sets for the first CIS communication link and the second CIS communication link may be the same or different from each other.

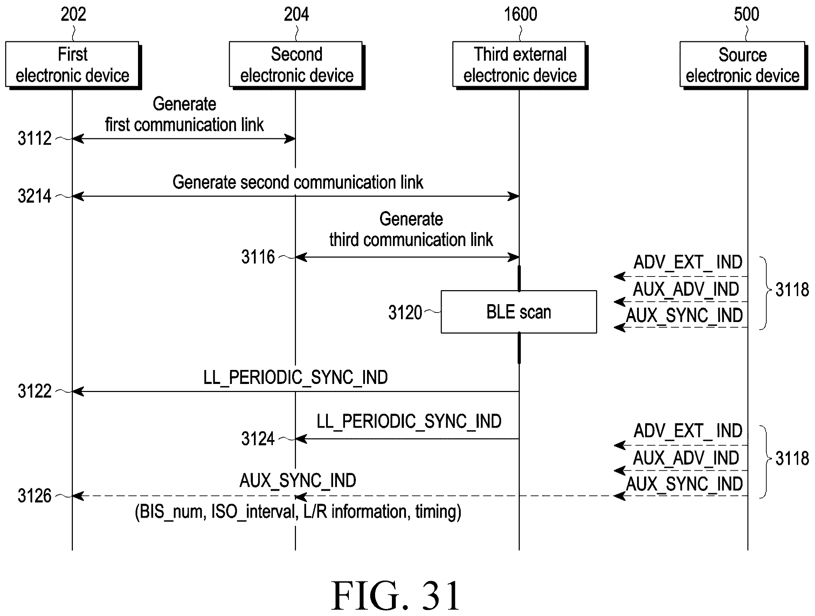

FIG. 31 is a view illustrating BLE scan by a BIS assistant according to an embodiment of the disclosure. According to embodiments, at least one of operations described below may be omitted, modified, or reordered.

Referring to FIG. 31, in operation 3112, the first electronic device 202 may generate a first communication link 1610 for bridge communication (e.g., inter-TWS communication) with the second electronic device 204. In operation 3114, the first electronic device 202 may generate a second communication link 1606 with a third external electronic device 1600 of BIS assistant role. In operation 3116, the second electronic device 204 may generate a third communication link 1608 with the third external electronic device 1600. The third external electronic device 1600 may generate the second communication link 1606 or the third communication link 1608 by receiving advertising data 2910 or 3010 (e.g., at least one periodic advertising PDU) from the first electronic device 202 or the second electronic device 204 through BLE scan 2912 or 3012.

In operation 3118, the source electronic device 500 may periodically broadcast advertising data including at least one advertising packet (e.g., ADV_EXT_IND, AUX_ADV_IND, or AUX_SYNC_IND) for a BIS audio service. In operation 3120, the third external electronic device 1600 of BIS assistant role may perform BLE scan to discover a BIS audio service by a designated condition. The third external electronic device 1600 may perform BLE scan based on receiving a user input using an input device of a user interface. For example, the third external electronic device 1600 may perform BLE scan to receive advertising data transmitted by a surrounding BIS source (e.g., the source electronic device 500) based on a user input through a BIS device discovering menu.

In operations 3122 and 3124, the third external electronic device 1600 may transmit a message (e.g., LL_PERIODIC_SYNC_IND) including synchronization information obtained from the advertising data to the first electronic device 202 and the second electronic device 204 through the second communication link 1606 or the third communication link 1608. In operation 3126, the first electronic device 202 and the second electronic device 204 may receive advertising data (e.g., AUX_SYNC_IND) broadcast by the source electronic device 500 using the synchronization information and may obtain BIG parameters (e.g., BIG information 600 or at least one of BIS_num, ISO_interval, L/R information, or timing information) for a BIS audio service from the advertising data.

Although not illustrated, at least one of the first electronic device 202 or the second electronic device 204 may directly perform BLE scan to synchronize with the source electronic device 500 without an assistant of the third external electronic device 1600. At least one of the first electronic device 202 or the second electronic device 204 may perform BLE scan based on a user input through a user interface, or may perform BLE scan according to a predetermined rule. When one electronic device (e.g., the first electronic device 202) performs BLE scan, the first electronic device 202 may deliver information (e.g., synchronization information or BIG information 600) necessary to receive a BIS audio service of the source electronic device 500 to the second electronic device 204.

The first electronic device 202 may recognize existence of an additional audio service by receiving additional audio information through an ACAD field of advertising data (e.g., AUX_SYNC_IND of operation 3126 or another AUX_SYNC_IND) broadcast by the source electronic device 500 or a header of a BIS audio data packet. The first electronic device 202 may recognize length and position of a third time period (e.g., the third time period 1506) where an additional audio service is performed based on the additional audio information, or according to a pre-agreed rule. The first electronic device 202 may recognize configuration (e.g., sequence number) of audio data packets transmitted in a third time period (e.g., the third time period 1506) based on the additional audio information, or according to a pre-agreed rule.

The first electronic device 202 and the source electronic device 500 may use a method (e.g., ACAD field or header) agreed between the source electronic device 500 and the first electronic device 202 to perform operations (e.g., additional audio service) related to BIS within a second time period (e.g., the second time period 1504) other than a first time period (e.g., the first time period 1502) for BIS provided by the source electronic device 500.

The first electronic device 202 may recognize a third time period (e.g., the third time period 1506) for an additional audio service through additional audio information or according to a pre-agreed rule, and may set a priority of the third time period (e.g., the third time period 1506) related to the additional audio service. In an embodiment, a priority of bridge communication between the first electronic device 202 and the second electronic device 204 that may operate in a second time period (e.g., the second time period 1504), or communication (e.g., ACL communication or CIS communication) between the first electronic device 202 and the third external electronic device 1600 may be higher than a priority of an additional audio service through a third time period (e.g., the third time period 1506).

Table 3 below shows an example of a priority table defining priorities of communication tasks that may be performed in the first electronic device 202.

**[Table 3]**

| task | priority |
|---|---|
| page scan | 9 |
| page | 13 |
| inquiry scan | 9 |
| inquiry | 5 |
| BLE scan | 3 |
| bridge communication | 17 |
| active mode BT communication | 15 |
| sniff mode BT communication | 17 |
| CIS audio service | 15 |
| BIS audio service | 18 |
| additional audio service | 13 |

In an embodiment, a priority table (e.g., Table 3) used in the first electronic device 202 may be the same as or at least partially different from a priority table (e.g., Table 1) used in the source electronic device 500.The first electronic device 202 may receive first audio data in a first time period (e.g., the first time period 1502), and may preferentially perform a task with high priority by comparing priorities of other communication tasks scheduled in a second time period (e.g., the second time period 1504) with a priority of an additional audio service.

For example, when an additional audio service could not be performed due to low priority compared to other communication tasks in at least one previous ISO interval, the first electronic device 202 may increase a priority of the additional audio service by one step (e.g., by '1'), and may perform another communication task in a current ISO interval. The first electronic device 202 may restore a priority of an additional audio service to a default value (e.g., '13') when it determines to perform an additional audio service (e.g., receive second audio data) in a second time period (e.g., the second time period 1504) of the next ISO interval according to a result of comparing a priority of the additional audio service and a priority of a scheduled other communication task in the next ISO interval. For example, when no other communication task scheduled in a second time period (e.g., the second time period 1504) exists, the first electronic device 202 may preferentially perform an additional audio service.

The first electronic device 202 may receive second audio data for an additional audio service in a third time period (e.g., the third time period 1506). A number of retransmissions of audio data packets within a first time period (e.g., the first time period 1502) is set at a time when BIS is generated, and retransmission is not performed after a designated time. The first electronic device 202 may provide high-quality audio service to a user by receiving audio data packets whose retransmission has ended in a first time period in a third time period.

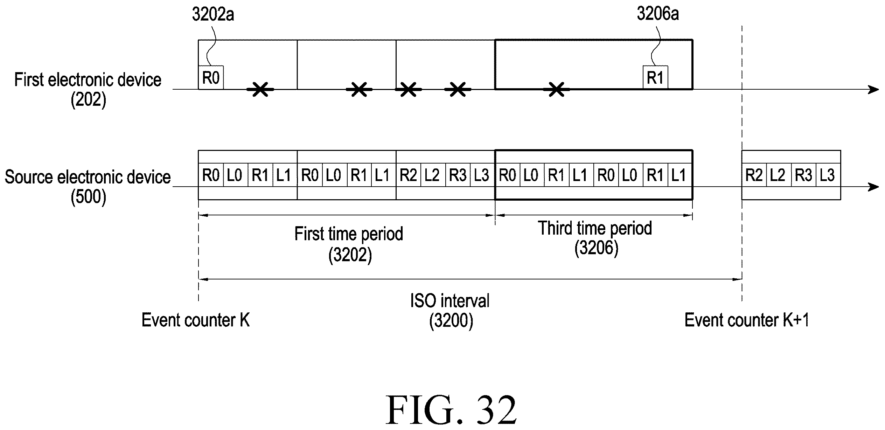

FIG. 32 is a view illustrating an operation of receiving unreceived packets through an additional audio service according to an embodiment of the disclosure.

Referring to FIG. 32, during a first time period 3202 identified by BIG information within an ISO interval 3200, the first electronic device 202 may successfully receive only a first R0 packet 3202a among first audio data (e.g., R0, L0, R1, L1, R0, L0, R1, L1, R2, L2, R3, and L3 packets) transmitted by the source electronic device 500 and may fail in reception of R1, R2, R3 packets. Here, R0 and R1 packets may correspond to a current event counter (e.g., event counter K), and R2, R3 packets may correspond to a next event counter (e.g., event counter K+1).

The source electronic device 500 may transmit second audio data (e.g., R0, L0, R1, L1, R0, L0, R1, and L1 packets) in a third time period 3206 allocated for an additional audio service. The first electronic device 202 may know in advance packet configuration (e.g., R0, L0, R1, L1, R0, L0, R1, and L1 packets) of second audio data transmitted in the third time period 3206 by additional audio information or a pre-agreed rule. The first electronic device 202 may attempt to receive an R1 packet at transmission opportunities (e.g., sub events) of an unreceived R1 packet corresponding to event counter K in the third time period 3206, and may successfully receive an R1 packet 3206a at a last transmission opportunity.

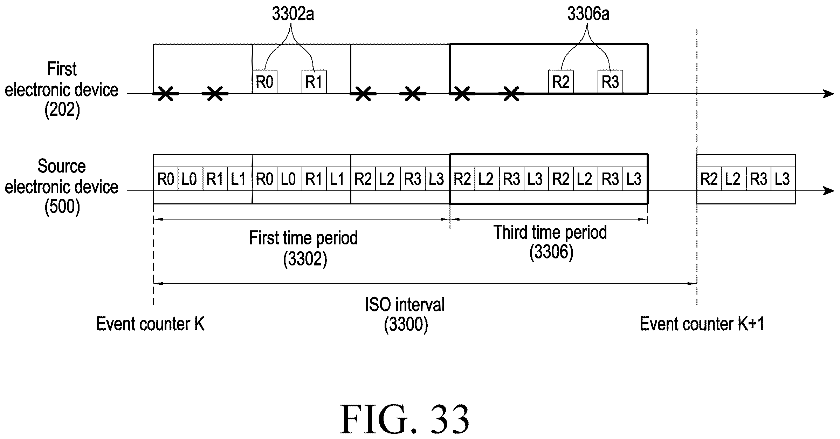

FIG. 33 is a view illustrating an operation of receiving future packets through an additional audio service according to an embodiment of the disclosure.

Referring to FIG. 33, during a first time period 3302 identified by BIG information within an ISO interval 3300, the first electronic device 202 may successfully receive only R0 and R1 packets 3202a among first audio data (e.g., R0, L0, R1, L1, R0, L0, R1, L1, R2, L2, R3, and L3 packets) transmitted by the source electronic device 500 and may fail in reception of R2 and R3 packets. Here, R0 and R1 packets may correspond to a current event counter (e.g., event counter K), and R2, R3 packets may correspond to a next event counter (e.g., event counter K+1).

The source electronic device 500 may transmit second audio data (e.g., R2, L2, R3, L3, R2, L2, R3, and L3 packets) in a third time period 3306 allocated for an additional audio service. The first electronic device 202 knows in advance packet configuration (e.g., R2, L2, R3, L3, R2, L2, R3, and L3 packets) of second audio data transmitted in the third time period 3306 by additional audio information or a pre-agreed rule. The first electronic device 202 may attempt to receive R2 and R3 packets at transmission opportunities (e.g., sub events) of unreceived R2 and R3 packets corresponding to event counter K+1 in the third time period 3306, and may successfully receive R2 and R3 packets 3306a at last transmission opportunities.

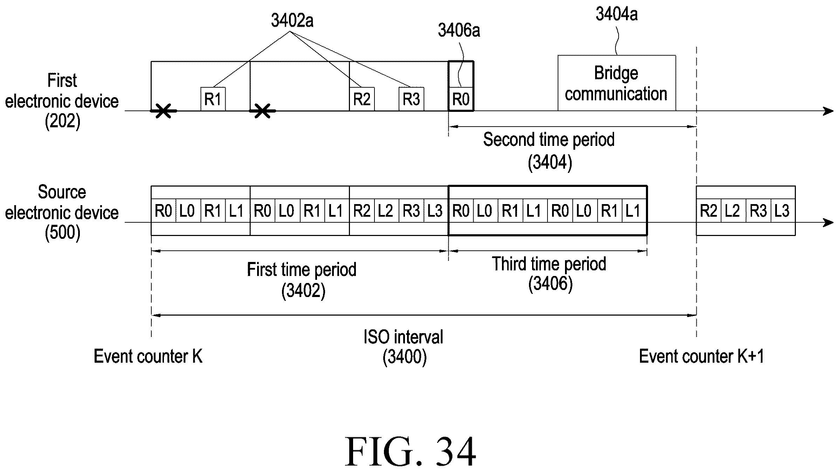

FIG. 34 is a view illustrating an example of performing another communication task after reception of additional audio data according to an embodiment of the disclosure.

Referring to FIG. 34, during a first time period 3402 identified by BIG information within an ISO interval 3400, the first electronic device 202 may successfully receive R1, R2, and R3 packets 3402a among first audio data (e.g., R0, L0, R1, L1, R0, L0, R1, L1, R2, L2, R3, and L3 packets) transmitted by the source electronic device 500 and may fail in reception of an R0 packet. The source electronic device 500 may transmit second audio data (e.g., R0, L0, R1, L1, R0, L0, R1, and L1 packets) in a third time period 3406 allocated for an additional audio service within a second time period 3404. The first electronic device 202 may know in advance packet configuration (e.g., R0, L0, R1, L1, R0, L0, R1, and L1 packets) of second audio data transmitted in the third time period 3406 by additional audio information or a pre-agreed rule.

The first electronic device 202 may adjust and use a third time period 3406 for an additional audio service according to a reception result of first audio data. The first electronic device 202 may attempt to receive only a missed R0 packet 3406a in the third time period 3406. When an R0 packet 3406a is successfully received at a first transmission opportunity within the third time period 3406, the first electronic device 202 may not attempt to receive audio data at remaining transmission opportunities of the third time period 3406. The first electronic device 202 may perform another scheduled communication task (e.g., bridge communication 3404a) during remaining time periods after a first transmission opportunity within the third time period 3406. In an embodiment, bridge communication 3404a may have a lower priority compared to an additional audio service, and thus bridge communication 3404a may be performed after reception of second audio data (e.g., R0 packet 3406a) within a second time period 3404.

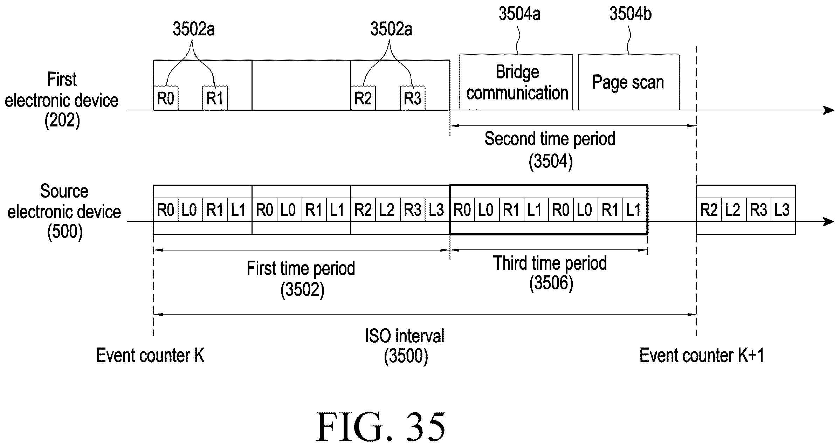

FIG. 35 is a view illustrating an example of performing another communication task after reception of additional audio data according to an embodiment of the disclosure.

Referring to FIG. 35, during a first time period 3502 identified by BIG information within an ISO interval 3500, the first electronic device 202 may successfully receive all of R0, R1, R2, and R3 packets 3502a among first audio data (e.g., R0, L0, R1, L1, R0, L0, R1, L1, R2, L2, R3, and L3 packets) transmitted by the source electronic device 500. The source electronic device 500 may transmit second audio data (e.g., R0, L0, R1, L1, R0, L0, R1, and L1 packets) in a third time period 3506 allocated for an additional audio service within a second time period 3504. The first electronic device 202 may know in advance packet configuration (e.g., R0, L0, R1, L1, R0, L0, R1, and L1 packets) of first audio data transmitted in the third time period 3506 by additional audio information or a pre-agreed rule.

The first electronic device 202 may determine that it is not necessary to receive second audio data in a third time period 3506 for an additional audio service according to a reception result of first audio data. The first electronic device 202 may perform other scheduled communication tasks (e.g., bridge communication 3504a and/or page scan 3504b) during a second time period 3504. Bridge communication 3504a and/or page scan 3504b may be performed within the second time period 3504.

An electronic device 500 according to an embodiment may include memory 1130 storing instructions, communication circuitry 1120, and at least one processor 1110 functionally connected to the memory and the communication circuitry. The instructions may, when executed by the at least one processor, cause the electronic device to allocate a first time period 1502 for transmitting first audio data within an interval 1500 of a broadcast stream-based audio service. The instructions may, when executed by the at least one processor, cause the electronic device to allocate a third time period 1506 for an additional audio service related to the audio service within a remaining second time period 1504 except for the first time period within the interval. The instructions may, when executed by the at least one processor, cause the electronic device to transmit first information 600 related to the first time period and second information 2300, 2402 related to the third time period. The instructions may, when executed by the at least one processor, cause the electronic device to transmit the first audio data 1512 in the first time period. The instructions may, when executed by the at least one processor, cause the electronic device to determine whether a first priority of the additional audio service is higher than a second priority of a communication task scheduled in the second time period. The instructions may, when executed by the at least one processor, cause the electronic device to transmit second audio data 1514 related to the first audio data in the third time period when the first priority of the additional audio service is higher than the second priority.

In an embodiment, the second audio data may include one or more audio packets among first audio packets included in the first audio data, one or more audio packets defined by a pre-transmission offset (PTO) among the first audio packets included in the first audio data, or one or more second audio packets subsequent to the first audio packets.

In an embodiment, the first information and the second information may be transmitted, the first information and the second information being included in at least one advertising packet or at least one audio data packet. The first information may include one or more broadcast isochronous group (BIG) parameters.

In an embodiment, the second information may include at least one of information 2306 indicating an audio type of the second audio data, information 2308 indicating the third time period, or information 2402 indicating that the second audio data is present.

In an embodiment, the instructions may cause the electronic device to transmit the second audio data related to the first audio data in the third time period when a communication task scheduled in the second time period does not exist, and perform the communication task in the second time period when the first priority of the additional audio service is not higher than the second priority of the communication task scheduled in the second time period.

In an embodiment, the communication task may include a Wi-Fi operation and/or a Bluetooth concurrency operation. The Bluetooth concurrency operation may include at least one of inquiry, inquiry scan, page, page scan, BLE scan, BLE advertising, or Bluetooth and/or BLE connection maintenance.

An electronic device 202 according to an embodiment may include memory 390 storing instructions, communication circuitry 320, and at least one processor 310 functionally connected to the memory and the communication circuitry. The instructions may, when executed by the at least one processor, cause the electronic device to obtain first information 600 including parameters for a broadcast stream-based audio service and second information 2300, 2402 related to an additional audio service related to the audio service. The instructions may, when executed by the at least one processor, cause the electronic device to synchronize to the broadcast stream for the audio service based on the first information. The instructions may, when executed by the at least one processor, cause the electronic device to receive first audio data 1512 in a first time period 1502 within an interval 1500 for the audio service identified based on the first information. The instructions may, when executed by the at least one processor, cause the electronic device to determine whether a communication task scheduled for a remaining second time period 1504 except for the first time period within the interval exists and whether a first priority of the additional audio service is higher than a second priority of the communication task. The instructions may, when executed by the at least one processor, cause the electronic device to receive second audio data 1514 related to the first audio data in a third time period 1506 within the second time period identified based on the second information when the first priority of the additional audio service is higher than the second priority of the communication task.

In an embodiment, the second audio data may include one or more audio packets among first audio packets included in the first audio data, one or more audio packets defined by a pre-transmission offset (PTO) among the first audio packets included in the first audio data, or one or more second audio packets subsequent to the first audio packets.

In an embodiment, the instructions may cause the electronic device to receive the second audio data related to the first audio data in the third time period when a communication task scheduled in the second time period does not exist, and perform the communication task in the second time period when the first priority of the additional audio service is not higher than the second priority of the communication task scheduled in the second time period.

In an embodiment, the instructions may cause the electronic device to identify at least one data packet not received during the first time period, receive the second audio data including the at least one data packet not received within the third time period, and perform the communication task during a remaining time period after the at least one data packet not received is received within the third time period.

A method performed by an electronic device 500 according to an embodiment may include allocating 1405 a first time period 1502 for transmitting first audio data within an interval 1500 of a broadcast stream-based audio service. The method may include allocating 1410 a third time period 1506 for an additional audio service related to the audio service within a remaining second time period 1504 except for the first time period within the interval. The method may include transmitting 1415 first information 600 related to the first time period and second information 2300, 2402 related to the third time period. The method may include transmitting 1420 the first audio data 1512 in the first time period. The method may include determining 1425 whether a first priority of the additional audio service is higher than a second priority of a communication task scheduled in the second time period. The method may include transmitting 1430 second audio data 1514 related to the first audio data in the third time period when the first priority of the additional audio service is higher than the second priority.

In an embodiment, the second audio data may include one or more audio packets among first audio packets included in the first audio data, one or more audio packets defined by a pre-transmission offset (PTO) among the first audio packets included in the first audio data, or one or more second audio packets subsequent to the first audio packets.

In an embodiment, the first information and the second information may be transmitted, the first information and the second information being included in at least one advertising packet or at least one audio data packet. In an embodiment, the first information may include one or more broadcast isochronous group (BIG) parameters.

In an embodiment, the second information may include at least one of information 2306 indicating an audio type of the second audio data, information 2308 indicating the third time period, or information 2402 indicating that the second audio data is present.

In an embodiment, the method may include transmitting 1430 the second audio data related to the first audio data in the third time period when a communication task scheduled in the second time period does not exist, and performing 1435 the communication task in the second time period when the first priority of the additional audio service is not higher than the second priority of the communication task scheduled in the second time period.

In an embodiment, the communication task may include a Wi-Fi operation and/or a Bluetooth concurrency operation. The Bluetooth concurrency operation may include at least one of inquiry, inquiry scan, page, page scan, BLE scan, BLE advertising, or Bluetooth and/or BLE connection maintenance.

A method performed by an electronic device 202 according to an embodiment may include obtaining 1810, 1910 first information 600 including parameters for a broadcast stream-based audio service and second information 2300, 2402 related to an additional audio service related to the audio service. The method may include synchronizing 1815, 1915 to the broadcast stream for the audio service based on the first information. The method may include receiving 1820, 1920 first audio data 1512 in a first time period 1502 within an interval 1500 for the audio service identified based on the first information. The method may include determining 1825, 1925 whether a communication task scheduled for a remaining second time period 1504 except for the first time period within the interval exists and whether a first priority of the additional audio service is higher than a second priority of the communication task. The method may include receiving 1930 second audio data 1514 related to the first audio data in a third time period 1506 within the second time period identified based on the second information when the first priority of the additional audio service is higher than the second priority of the communication task.

In an embodiment, the second audio data may include one or more audio packets among first audio packets included in the first audio data, one or more audio packets defined by a pre-transmission offset (PTO) among the first audio packets included in the first audio data, or one or more second audio packets subsequent to the first audio packets.

In an embodiment, the method may include receiving 1830, 1930 the second audio data related to the first audio data in the third time period when a communication task scheduled in the second time period does not exist, and performing 1835, 1935 the communication task in the second time period when the first priority of the additional audio service is not higher than the second priority of the communication task scheduled in the second time period.

In an embodiment, the method may include identifying at least one data packet not received during the first time period, receiving the second audio data including the at least one data packet not received within the third time period, and performing the scheduled communication task during a remaining time period after the at least one data packet not received is received within the third time period.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the memory 390, internal memory 136 or external memory 138) that is readable by a machine (e.g., the electronic device 202 or 204 or the electronic device 101). For example, a processor (e.g., the processor 310 or processor 120) of the machine (e.g., the electronic device 202 or 204 or electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (500), comprising:
memory (1130) storing instructions;
communication circuitry (1120); and
at least one processor (1110) functionally connected to the memory and the communication circuitry,
wherein the instructions, when executed by the at least one processor, cause the electronic device to:
allocate a first time period (1502) for transmitting first audio data within an interval (1500) of a broadcast stream-based audio service,
allocate a third time period (1506) for an additional audio service related to the audio service within a remaining second time period (1504) except for the first time period within the interval,
transmit first information (600) related to the first time period and second information (2300, 2402) related to the third time period,
transmit the first audio data (1512) in the first time period,
determine whether a first priority of the additional audio service is higher than a second priority of a communication task scheduled in the second time period, and
transmit second audio data (1514) related to the first audio data in the third time period when the first priority of the additional audio service is higher than the second priority.

2. The electronic device of claim 1, wherein the second audio data comprises:
one or more audio packets among first audio packets included in the first audio data,
one or more audio packets defined by a pre-transmission offset (PTO) among the first audio packets included in the first audio data, or
one or more second audio packets subsequent to the first audio packets.

3. The electronic device of claim 1 or 2, wherein the first information and the second information are transmitted, the first information and the second information being included in at least one advertising packet or at least one audio data packet, and
wherein the first information comprises one or more broadcast isochronous group (BIG) parameters.

4. The electronic device of any one of claims 1 to 3, wherein the second information comprises at least one of:
information (2306) indicating an audio type of the second audio data,
information (2308) indicating the third time period, or
information (2402) indicating that the second audio data exists.

5. The electronic device of any one of claims 1 to 4, wherein the instructions cause the electronic device to:
transmit the second audio data related to the first audio data in the third time period when no communication task is scheduled in the second time period, and
perform the communication task in the second time period when the first priority of the additional audio service is not higher than the second priority of the communication task scheduled in the second time period.

6. The electronic device of any one of claims 1 to 5, wherein the communication task comprises Wi-Fi operation and/or a Bluetooth concurrency operation, and
wherein the Bluetooth concurrency operation comprises at least one of inquiry, inquiry scan, page, page scan, BLE scan, BLE advertising, or Bluetooth and/or BLE connection maintenance.

7. An electronic device (202), comprising:
memory (390) storing instructions;
communication circuitry (320); and
at least one processor (310) functionally connected to the memory and the communication circuitry, wherein the instructions, when executed by the at least one processor, cause the electronic device to:
obtain first information (600) including parameters for a broadcast stream-based audio service and second information (2300, 2402) related to an additional audio service related to the audio service,
synchronize to the broadcast stream for the audio service based on the first information,
receive first audio data (1512) in a first time period (1502) within an interval (1500) for the audio service identified based on the first information,
determine whether a communication task scheduled for a remaining second time period (1504) except for the first time period within the interval exists and whether a first priority of the additional audio service is higher than a second priority of the communication task, and
receive second audio data (1514) related to the first audio data in a third time period (1506) within the second time period identified based on the second information when the first priority of the additional audio service is higher than the second priority of the communication task.

8. The electronic device of claim 7, wherein the second audio data includes one or more audio packets among first audio packets included in the first audio data, one or more audio packets defined by a pre-transmission offset (PTO) among the first audio packets included in the first audio data, or one or more second audio packets subsequent to the first audio packets.

9. The electronic device of claim 7 or 8, wherein the instructions cause the electronic device to:
receive the second audio data related to the first audio data in the third time period when a communication task scheduled in the second time period does not exist, and
perform the communication task in the second time period when the first priority of the additional audio service is not higher than the second priority of the communication task scheduled in the second time period.

10. The electronic device of any one of claims 7 to 9, wherein the instructions cause the electronic device to:
identify at least one data packet not received during the first time period,
receive the second audio data including the at least one data packet not received within the third time period, and
perform the communication task during a remaining time period after the at least one data packet not received is received within the third time period.

11. A method performed by an electronic device (500), comprising:
allocating (1405) a first time period (1502) for transmitting first audio data within an interval (1500) of a broadcast stream-based audio service;
allocating (1410) a third time period (1506) for an additional audio service related to the audio service within a remaining second time period (1504) except for the first time period within the interval;
transmitting (1415) first information (600) related to the first time period and second information (2300, 2402) related to the third time period;
transmitting (1420) the first audio data (1512) in the first time period;
determining (1425) whether a first priority of the additional audio service is higher than a second priority of a communication task scheduled in the second time period; and
transmitting (1430) second audio data (1514) related to the first audio data in the third time period when the first priority of the additional audio service is higher than the second priority.

12. The method of claim 11, wherein the second audio data includes one or more audio packets among first audio packets included in the first audio data, one or more audio packets defined by a pre-transmission offset (PTO) among the first audio packets included in the first audio data, or one or more second audio packets subsequent to the first audio packets.

13. The method of claim 11 or 12, wherein the first information and the second information are transmitted while being included in at least one advertising packet or at least one audio data packet, and the first information includes one or more broadcast isochronous group (BIG) parameters.

14. A method performed by an electronic device (202), comprising:
obtaining (1810, 1910) first information (600) including parameters for a broadcast stream-based audio service and second information (2300, 2402) related to an additional audio service related to the audio service;
synchronizing (1815, 1915) to the broadcast stream for the audio service based on the first information;
receiving (1820, 1920) first audio data (1512) in a first time period (1502) within an interval (1500) for the audio service identified based on the first information;
determining (1825, 1925) whether a communication task scheduled for a remaining second time period (1504) except for the first time period within the interval exists and whether a first priority of the additional audio service is higher than a second priority of the communication task; and
receiving (1930) second audio data (1514) related to the first audio data in a third time period (1506) within the second time period identified based on the second information when the first priority of the additional audio service is higher than the second priority of the communication task.

15. The method of claim 14, wherein the second audio data includes one or more audio packets among first audio packets included in the first audio data, one or more audio packets defined by a pre-transmission offset (PTO) among the first audio packets included in the first audio data, or one or more second audio packets subsequent to the first audio packets.
